(19) **Europäisches Patentamt / European Patent Office / Office européen des brevets**

(11) **EP 4 734 598 A1**

(12) **EUROPEAN PATENT APPLICATION**
published in accordance with Art. 153(4) EPC

(43) Date of publication:
29.04.2026 Bulletin 2026/18

(21) Application number: 24826324.6

(22) Date of filing: 24.06.2024

(51) International Patent Classification (IPC):
$H04W\ 24/08^{(2009.01)}$  $H04W\ 24/10^{(2009.01)}$
$H04W\ 76/18^{(2018.01)}$  $H04W\ 76/28^{(2018.01)}$
$G01C\ 21/00^{(2006.01)}$  $H04W\ 84/06^{(2009.01)}$
$H04W\ 52/02^{(2009.01)}$  $H04W\ 92/10^{(2009.01)}$

(52) Cooperative Patent Classification (CPC):
G01C 21/00; H04W 24/08; H04W 24/10;
H04W 52/02; H04W 76/18; H04W 76/28;
H04W 84/06; H04W 92/10

(86) International application number:
PCT/KR2024/008684

(87) International publication number:
WO 2024/263009 (26.12.2024 Gazette 2024/52)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 22.06.2023 KR 20230080452
22.06.2023 KR 20230080481
26.06.2023 KR 20230081928
26.06.2023 KR 20230081948

(71) Applicant: **LG Electronics Inc.
Yeongdeungpo-gu
Seoul 07336 (KR)**

(72) Inventor: **PARK, Giwon
Seoul 06772 (KR)**

(74) Representative: **Frenkel, Matthias Alexander
Wuesthoff & Wuesthoff
Patentanwälte und Rechtsanwalt PartG mbB
Schweigerstraße 2
81541 München (DE)**

(54) **METHOD AND DEVICE FOR PERFORMING COMMUNICATION IN WIRELESS COMMUNICATION SYSTEM**

(57) Provided are a method for performing wireless communication by a first device, and a device for supporting same. The method may comprise the steps of: obtaining first radio link failure (RLF) configuration information related to a first altitude including information on a first maximum number of times of out-of-sync (OOS) related to the first altitude and information on a first RLF timer related to the first altitude, and second RLF configuration information related to a second altitude including information on a second maximum number of times of OOS related to the second altitude and information on a second RLF timer related to the second altitude; identifying the altitude of the first device as the first altitude; selecting the first maximum number of times of OOS related to the first altitude and the first RLF timer related to the first altitude on the basis of the altitude of the first device being identified as the first altitude; and starting the first RLF timer related to the first altitude on the basis of the number of times of OOS reaching the first maximum number of times of OOS related to the first altitude. For example, the number of times of the OOS may be increased on the basis of obtaining information on the OOS from a lower layer of the first device.

# FIG. 14

obtaining first RLF configuration information related to
a first altitude including information related to
a first maximum number of OOS related to
a first altitude and information related to
a first RLF timer related to a first altitude,
and second RLF configuration information related to
a second altitude including information related to
a second maximum number of OOS related to
a second altitude and information related to
a second RLF timer related to a second altitude ⟩~S1410

identifying an altitude of a first device as a first altitude ⟩~S1420

based on that an altitude of
a first device has been identified as a first altitude,
selecting a first maximum number of
OOS related to a first altitude
and a first RLF timer related to a first altitude ⟩~S1430

based on that a number of OOS has reached
a first maximum number of OOS related to a first altitude,
initiating a first RLF timer related to a first altitude ⟩~S1440

## Description

### TECHNICAL FIELD

This disclosure relates to a wireless communication system.

### BACKGROUND ART

5G NR is a successor technology to long term evolution (LTE) and is a new clean-slate mobile communication system with characteristics such as high performance, low latency, high availability, etc. 5G NR may utilize all available spectrum resources, including low-frequency bands below 1 GHz, mid-frequency bands between 1 GHz and 10 GHz, high-frequency (millimeter wave) bands above 24 GHz, etc.

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, (vii) connected intelligence with machine learning capacity, etc. The vision of the 6G system may include four aspects such as intelligent connectivity, deep connectivity, holographic connectivity and ubiquitous connectivity, and the 6G system may satisfy the requirements shown in Table 1 below. That is, Table 1 shows the requirements of the 6G system.

[Table 1]

| Per device peak data rate | 1 Tbps |
|---|---|
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

## DISCLOSURE

### TECHNICAL PROBLEM

The present disclosure provides a method and device capable of effectively providing services in a wireless communication system. In particular, the present disclosure provides a method and device for communication.

### TECHNICAL SOLUTION

Based on an embodiment, a method for performing wireless communication by a first device may be provided. The method may include: obtaining first radio link failure (RLF) configuration information related to a first altitude including information related to a first maximum number of out-of-sync (OOS) related to the first altitude and information related to a first RLF timer related to the first altitude, and second RLF configuration information related to a second altitude including information related to a second maximum number of OOS related to the second altitude and information related to a second RLF timer related to the second altitude; identifying an altitude of the first device as the first altitude; based on that the altitude of the first device has been identified as the first altitude; selecting the first maximum number of OOS related to the first altitude and the first RLF timer related to the first altitude; and based on that a number of OOS has reached the first maximum number of OOS related to the first altitude, initiating the first RLF timer related to the first altitude. For example, the number of OOS may be incremented based on that information related to OOS has been obtained from a lower layer of the first device.

Based on an embodiment, a first device adapted to perform wireless communication may be provided. The first device may include: at least one transceiver; at least one processor; and at least one memory connected to the at least one processor and storing instructions, and the instructions, based on being executed by the at least one processor, may cause the first device to perform operations comprising: obtaining first radio link failure (RLF) configuration information related to a first altitude including information related to a first maximum number of out-of-sync (OOS) related to the first altitude and information related to a first RLF timer related to the first altitude, and second RLF configuration information related to a second altitude including information related to a second maximum number of OOS related to the second altitude and information related to a second RLF timer related to the second altitude; identifying an altitude of the first device as the first altitude; based on that the altitude of the first device has been identified as the first altitude, selecting the first maximum number of OOS related to the first altitude and the first RLF timer related to the first altitude; and based on that a number of OOS has reached the first maximum number of OOS related to the first altitude, initiating the first RLF timer related to the first altitude. For example, the number of OOS may be incremented based on that information related to OOS has been obtained from a lower layer of the first device.

Based on an embodiment, a processing device adapted to control a first device may be provided. For example, the processing device may include: at least one processor; and at least one memory connected to the at least one processor and storing instructions, and the instructions, based on being executed by the at least one processor, may cause the first device to perform operations comprising: obtaining first radio link failure (RLF) configuration information related to a first altitude including information related to a first maximum number of out-of-sync (OOS) related to the first altitude and information related to a first RLF timer related to the first altitude, and second RLF configuration information related to a second altitude including information related to a second maximum number of OOS related to the second altitude and information related to a second RLF timer related to the second altitude; identifying an altitude of the first device as the first altitude; based on that the altitude of the first device has been identified as the first altitude, selecting the first maximum number of OOS related to the first altitude and the first RLF timer related to the first altitude; and based on that a number of OOS has reached the first maximum number of OOS related to the first altitude, initiating the first RLF timer related to the first altitude. For example, the number of OOS may be incremented based on that information related to OOS has been obtained from a lower layer of the first device.

Based on an embodiment, a non-transitory computer-readable storage medium storing instructions may be provided. The instructions, based on being executed, may cause a first device to perform operations comprising: obtaining first radio link failure (RLF) configuration information related to a first altitude including information related to a first maximum number of out-of-sync (OOS) related to the first altitude and information related to a first RLF timer related to the first altitude, and second RLF configuration information related to a second altitude including information related to a second maximum number of OOS related to the second altitude and information related to a second RLF timer related to the second altitude; identifying an altitude of the first device as the first altitude; based on that the altitude of the first device has been identified as the first altitude, selecting the first maximum number of OOS related to the first altitude and the first RLF timer related to the first altitude; and based on that a number of OOS has reached the first maximum number of OOS related to the first altitude, initiating the first RLF timer related to the first altitude. For example, the number of OOS may be incremented based on that information related to OOS has been obtained from a lower layer of the first device.

Based on an embodiment, a method for performing wireless communication by a base station may be provided. The method may include: obtaining first radio link failure (RLF) configuration information related to a first altitude including information related to a first maximum number of out-of-sync (OOS) related to the first altitude and information related to a first RLF timer related to the first altitude, and second RLF configuration information related to a second altitude including information related to a second maximum number of OOS related to the second altitude and information related to a second RLF timer related to the second altitude; transmitting, to a first device, the first RLF configuration information related to the first altitude including information related to the first maximum number of OOS related to the first altitude and information related to the first RLF timer related to the first altitude, and the second RLF configuration information related to the second altitude including information related to the second maximum number of OOS related to the second altitude and information related to the second RLF timer related to the second altitude; and based on that an RLF has been detected, receiving, from the first device, information related to detection of the RLF. For example, an altitude of the first device may be identified as the first altitude. For example, the first maximum number of OOS related to the first altitude and the first RLF timer related to the first altitude may be selected based on that the altitude of the first device has been identified as the first altitude. For example, the first RLF timer related to the first altitude may be initiated based on that a number of OOS has reached the first maximum number of OOS related to the first altitude. For example, the number of OOS may be incremented based on that information related to OOS has been obtained from a lower layer of the first device.

Based on an embodiment, a base station adapted to perform wireless communication may be provided. The base station may include: at least one transceiver; at least one processor; and at least one memory connected to the at least one processor and storing instructions, and the instructions, based on being executed by the at least one processor, may cause the base station to perform operations comprising: obtaining first radio link failure (RLF) configuration information related to a first altitude including information related to a first maximum number of out-of-sync (OOS) related to the first altitude and information related to a first RLF timer related to the first altitude, and second RLF configuration information related to a second altitude including information related to a second maximum number of OOS related to the second altitude and information related to a second RLF timer related to the second altitude; transmitting, to a first device, the first RLF configuration information related to the first altitude including information related to the first maximum number of OOS related to the first altitude and information related to the first RLF timer related to the first altitude, and the second RLF configuration information related to the second altitude including information related to the second maximum number of OOS related to the second altitude and information related to the second RLF timer related to the second altitude; and based on that an RLF has been detected, receiving, from the first device, information related to detection of the RLF. For example, an altitude of the first device may be identified as the first altitude. For example, the first maximum number of OOS related to the first altitude and the first RLF timer related to the first altitude may be selected based on that the altitude of the first device has been identified as the first altitude. For example, the first RLF timer related to the first altitude may be initiated based on that a number of OOS has reached the first maximum number of OOS related to the first altitude. For example, the number of OOS may be incremented based on that information related to OOS has been obtained from a lower layer of the first device.

Based on an embodiment, a processing device adapted to control a base station may be provided. For example, the processing device may include: at least one processor; and at least one memory connected to the at least one processor and storing instructions, and the instructions, based on being executed by the at least one processor, may cause the base station to perform operations comprising: obtaining first radio link failure (RLF) configuration information related to a first altitude including information related to a first maximum number of out-of-sync (OOS) related to the first altitude and information related to a first RLF timer related to the first altitude, and second RLF configuration information related to a second altitude including information related to a second maximum number of OOS related to the second altitude and information related to a second RLF timer related to the second altitude; transmitting, to a first device, the first RLF configuration information related to the first altitude including information related to the first maximum number of OOS related to the first altitude and information related to the first RLF timer related to the first altitude, and the second RLF configuration information related to the second altitude including information related to the second maximum number of OOS related to the second altitude and information related to the second RLF timer related to the second altitude; and based on that an RLF has been detected, receiving, from the first device, information related to detection of the RLF. For example, an altitude of the first device may be identified as the first altitude. For example, the first maximum number of OOS related to the first altitude and the first RLF timer related to the first altitude may be selected based on that the altitude of the first device has been identified as the first altitude. For example, the first RLF timer related to the first altitude may be initiated based on that a number of OOS has reached the first maximum number of OOS related to the first altitude. For example, the number of OOS may be incremented based on that information related to OOS has been obtained from a lower layer of the first device.

Based on an embodiment, a non-transitory computer-readable storage medium storing instructions may be provided. The instructions, based on being executed, may cause a base station to perform operations comprising: obtaining first radio link failure (RLF) configuration information related to a first altitude including information related to a first maximum number of out-of-sync (OOS) related to the first altitude and information related to a first RLF timer related to the first altitude, and second RLF configuration information related to a second altitude including information related to a second maximum number of OOS related to the second altitude and information related to a second RLF timer related to the second altitude; transmitting, to a first device, the first RLF configuration information related to the first altitude including information related to the first maximum number of OOS related to the first altitude and information related to the first RLF timer related to the first altitude, and the second RLF configuration information related to the second altitude including information related to the second maximum number of OOS related to the second altitude and information related to the second RLF timer related to the second altitude; and based on that an RLF has been detected, receiving, from the first device, information related to detection of the RLF. For example, an altitude of the first device may be identified as the first altitude. For example, the first maximum number of OOS related to the first altitude and the first RLF timer related to the first altitude may be selected based on that the altitude of the first device has been identified as the first altitude. For example, the first RLF timer related to the first altitude may be initiated based on that a number of OOS has reached the first maximum number of OOS related to the first altitude. For example, the number of OOS may be incremented based on that information related to OOS has been obtained from a lower layer of the first device.

## ADVANTAGEOUS EFFECTS

The present disclosure may provide a method and device capable of effectively providing services in a wireless communication system. For example, through embodiments proposed by the present disclosure, communication may be efficiently performed.

## BRIEF DESCRIPTION OF THE DRAWINGS

FIG. 1 shows a communication structure providable in a 6G system, based on an embodiment of the present disclosure.

FIG. 2 shows an electromagnetic spectrum, based on an embodiment of the present disclosure.

FIG. 3 shows an example of an NTN typical scenario based on a transparent payload, based on an embodiment of the present disclosure.

FIG. 4 shows an example of an NTN typical scenario based on a regenerative payload, based on an embodiment of the present disclosure.

FIG. 5 shows an example of a sensing operation, based on an embodiment of the present disclosure.

FIG. 6 shows a structure of a slot of a frame, based on an embodiment of the present disclosure.

FIG. 7 shows an example of a BWP, based on an embodiment of the present disclosure.

FIG. 8 shows a procedure of performing V2X or SL communication by a UE based on a resource allocation mode, based on an embodiment of the present disclosure.

FIG. 9 shows a procedure related to RLF detection, based on an embodiment of the present disclosure.

FIG. 10 shows a procedure related to RLF detection, based on an embodiment of the present disclosure.

FIG. 11 shows an example related to RLF, based on an embodiment of the present disclosure.

FIG. 12 shows an example of an RLF parameter configured per altitude, based on an embodiment of the present disclosure.

FIG. 13 shows an example of an RLF parameter configured per altitude, based on an embodiment of the present disclosure.

FIG. 14 shows a method for a first device to perform wireless communication, based on an embodiment of the present disclosure.

FIG. 15 shows a method for a base station to perform wireless communication, based on an embodiment of the present disclosure.

FIG. 16 shows a communication system 1, based on an embodiment of the present disclosure.

FIG. 17 shows wireless devices, based on an embodiment of the present disclosure.

FIG. 18 shows a signal process circuit for a transmission signal, based on an embodiment of the present disclosure.

FIG. 19 shows another example of a wireless device, based on an embodiment of the present disclosure.

FIG. 20 shows a hand-held device, based on an embodiment of the present disclosure.

FIG. 21 shows a vehicle or an autonomous vehicle, based on an embodiment of the present disclosure.

## MODE FOR INVENTION

In the present disclosure, "A or B" may mean "only A", "only B" or "both A and B". In other words, in the present disclosure, "A or B" may be interpreted as "A and/or B". For example, in the present disclosure, "A, B or C" may mean "only A", "only B", "only C", or "any combination of A, B and C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, "configure/configured or define/defined" may be interpreted as being configured or pre-configured for a device through pre-defined signaling (e.g., SIB, MAC, RRC) from a base station or a network. In the present disclosure, "configure/configured or define/defined" may be interpreted as being pre-configured for a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802-20, evolved UTRA (E-UTRA), long term evolution (LTE), 5G NR, and so on.

The technology proposed in the present disclosure may be implemented as 6G wireless technology and may be applied to various 6G systems. For example, the 6G system may have key factors such as enhanced mobile broadband (eMBB), ultra-reliable low latency communications (URLLC), massive machine type communications (mMTC), artificial intelligence (AI) integrated communication, tactile internet, high throughput, high network capacity, high energy efficiency, low backhaul and access network congestion, and enhanced data security.

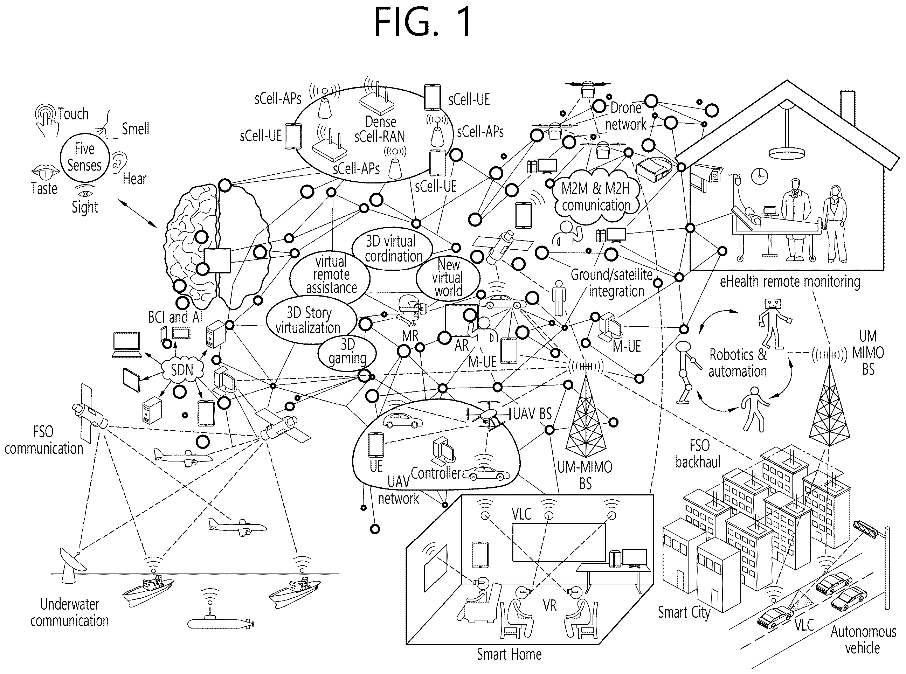

FIG. 1 shows a communication structure providable in a 6G system, based on an embodiment of the present disclosure. The embodiment of FIG. 1 may be combined with various embodiments of the present disclosure.

In 6G, new network characteristics may be as follows.

- Satellites integrated network
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.

- Small cell networks
- Ultra-dense heterogeneous network
- High-capacity backhaul
- Radar technology integrated with mobile technology: High-precision localization (or location-based service) through communication is one of the functions of the 6G wireless communication system. Accordingly, the radar system will be integrated with the 6G network.
- Softwarization and virtualization

Core implementation technology of 6G system is described below.

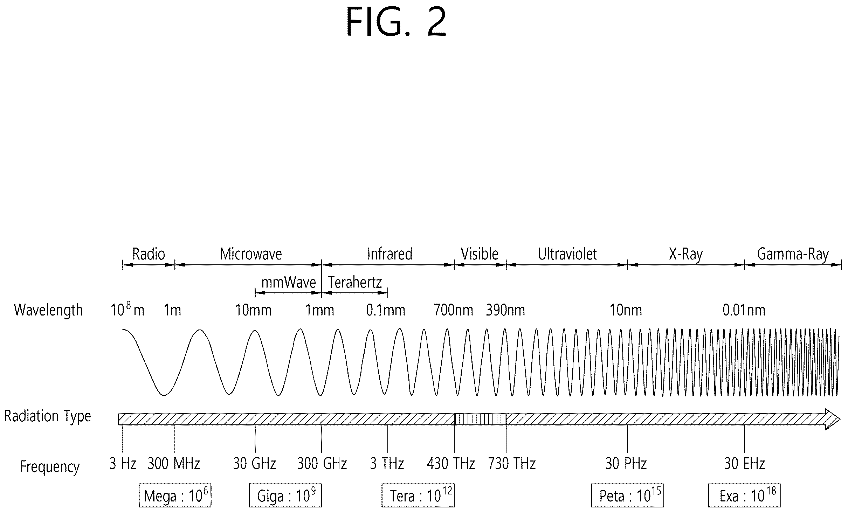

- Artificial Intelligence (AI): When AI is introduced to communication, real-time data transmission may be simplified and improved. AI may determine a method of performing complicated target tasks using countless analysis. That is, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. FIG. 2 shows an electromagnetic spectrum, based on an embodiment of the present disclosure. The embodiment of FIG. 2 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.

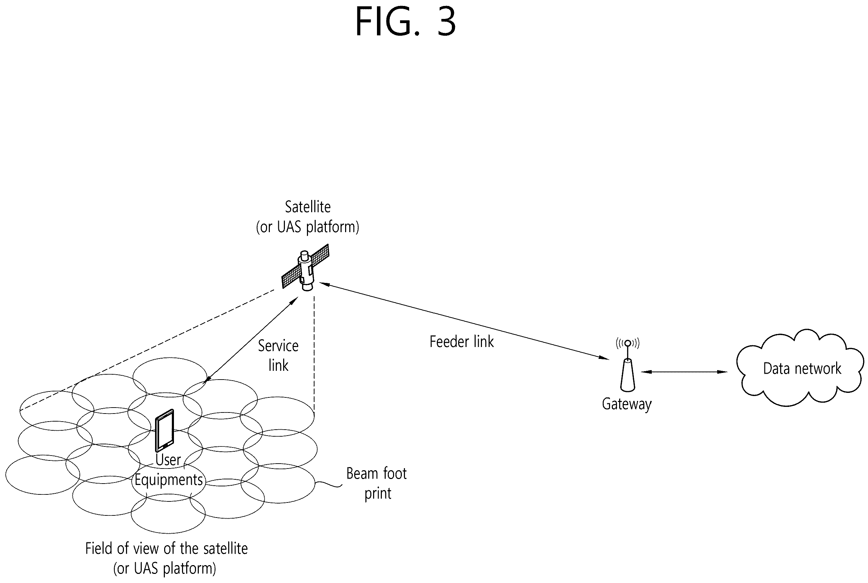

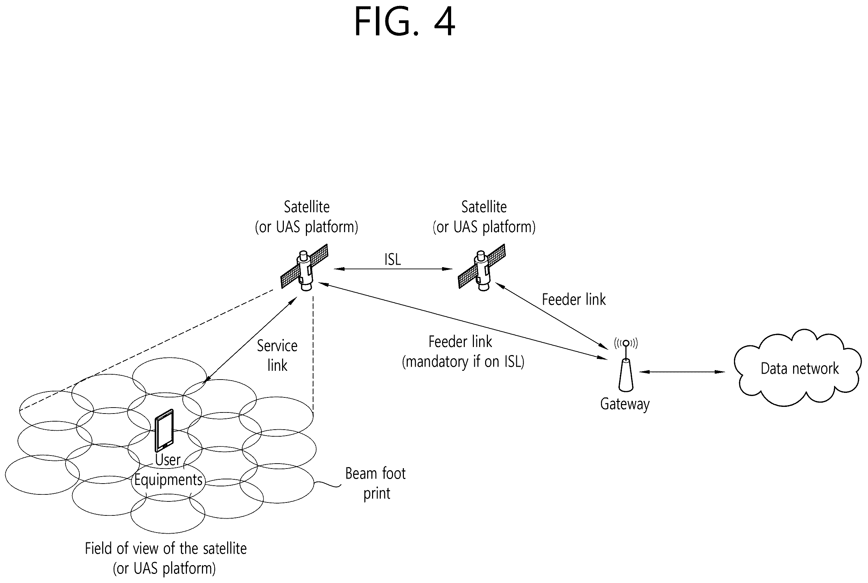

- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An UAV or a drone will be an important factor in 6G wireless communication. In most cases, a high-speed data wireless connection may be provided using UAV technology. A base station (BS) entity may be installed in the UAV to provide cellular connectivity. The UAV may have certain features, which are not found in fixed BS infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communication. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.
- Advanced air mobility (AAM): An AAM is a superordinate concept of urban air mobility (UAM), which is air transportation that can be used in an urban area, and may refer to a means of transportation that includes movement between the urban area and a regional hub.
- Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on. To maximize a performance of autonomous driving and to secure high safety, high transmission speed and low latency technology have to be needed. Furthermore, in the future, autonomous driving may need to go beyond delivering warnings or guidance messages to drivers and actively intervene in vehicle operation and directly control the vehicle in dangerous situations. To this end, since the amount of information that needs to be transmitted and received may be enormous, autonomous driving is expected to be maximized in 6G being higher transmission speed and lower latency than 5G.
- Non-terrestrial networks (NTN): An NTN may refer to a network or a network segment that utilizes radio frequency (RF) resources aboard a satellite (or an unmanned aerial system (UAS) platform). FIG. 3 shows an example of an NTN typical scenario based on a transparent payload, based on an embodiment of the present disclosure. FIG. 4 shows an example of an NTN typical scenario based on a regenerative payload, based on an embodiment of the present disclosure. The embodiment of FIG. 3 or FIG. 4 may be combined with various embodiments of the present disclosure. Referring to FIG. 3, a satellite (or an UAS platform) may establish a service link with a UE. The satellite (or the UAS platform) may be connected with a gateway through a feeder link. The satellite may be connected with a data network through the gateway. A beam footprint may refer to an area where signals transmitted by the satellite can be received. Referring to FIG. 4, a satellite (or an UAS platform) may establish a service link with a UE. The satellite (or the UAS platform) connected with the UE may be connected with another satellite (or another UAS platform) through an inter-satellite link (ISL). Another satellite (or another UAS platform) may be connected with a gateway through a feeder link. Based on the regenerative payload, the satellite may be connected with a data network through the gateway and another satellite. If the ISL does not exist between the satellite and another satellite, a feeder link between the satellite and the gateway may be required. FIGs. 3 and 4 are only examples of NTN scenarios, and the NTN can be implemented based on various types of scenarios. For example, the satellite (or the UAS platform) may implement a transparent or regenerative (with on board processing) payload. For example, the satellite (or the UAS platform) may generate multiple beams over a specified service area based on the field of view of the satellite (or the UAS platform). For example, the field of view of the satellite (or the UAS platform) may vary depending on an on-board antenna diagram and a minimum elevation angle. For example, the transparent payload may include radio frequency filtering, frequency conversion, and amplification. Therefore, the waveform signal repeated by the payload may not be changed. For example, the regenerative payload may include radio frequency filtering, frequency conversion and amplification, demodulation/decryption, switching and/or routing, and coding/modulation. For example, the regenerative payload may be substantially equivalent to equipping the satellite (or the UAS platform) with all or part of the base station functionality.

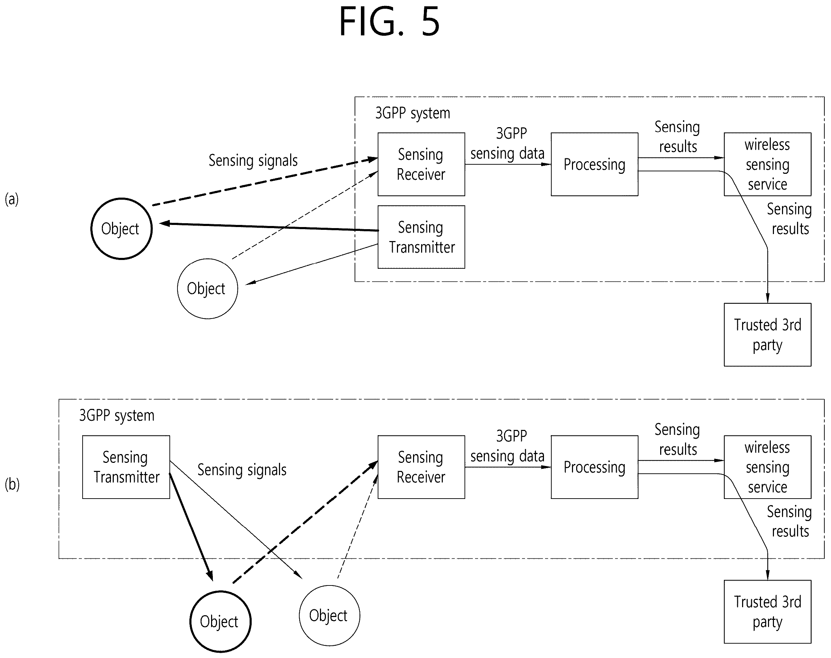

- Integrated sensing and communication (ISAC): Wireless sensing is a technology enabler to acquire information about characteristics of the environment and/or objects within the environment, that uses radio frequency to determine the distance (range), angle, or instantaneous linear velocity of objects, etc. Radio frequency sensing functionality can provide services for device-free object localization as there is lack of need for the object to be connected via a device in the network. The capabilities to obtain range, velocity, and angle information from the radio frequency signals can provide a broad range of new functionality, such as various objects detection, object recognition (e.g., vehicle, human, animal, UAV) and high accuracy localization, tracking and activity recognition. For example, the wireless sensing service may provide input to different verticals (e.g., unmanned aerial vehicle, smart home, V2X, factories, railways, public safety, etc.) enabling applications offering e.g., intruder detection, assisted automotive maneuvering and navigation, trajectory tracing, collision avoidance, traffic management, health and activity monitoring. In some cases, wireless sensing can also use non-3GPP type sensors (e.g., radar, camera) to further support the 3GPP-based sensing. For example, the operation of the wireless sensing service, i.e., sensing operation, may rely on processing the transmissions, reflections, and scattering of wireless sensing signals. Wireless sensing, therefore, may have the opportunity to enhance the legacy system from a communication network to a wireless communication and sensing network. FIG. 5 shows an example of a sensing operation, based on an embodiment of the present disclosure. The embodiment of FIG. 5 may be combined with various embodiments of the present disclosure. Specifically, (a) of FIG. 5 shows an example of sensing (e.g., monostatic sensing) with co-located sensing receiver and sensing transmitter, and (b) of FIG. 5 shows an example of sensing (e.g., bistatic sensing) with separated sensing receiver and sensing transmitter.

Layers of a radio interface protocol between the UE and the network may be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

The physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

A radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot ($N^{slot}_{symb}$), a number slots per frame ($N^{frame,u}_{slot}$), and a number of slots per subframe ($N^{subframe,u}_{slot}$) based on an SCS configuration (u), in a case where a normal CP or an extended CP is used.

[Table 2]

| CP type | SCS (15*2^u) | $N^{slot}_{symb}$ | $N^{frame,u}_{slot}$ | $N^{subframe,u}_{slot}$ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

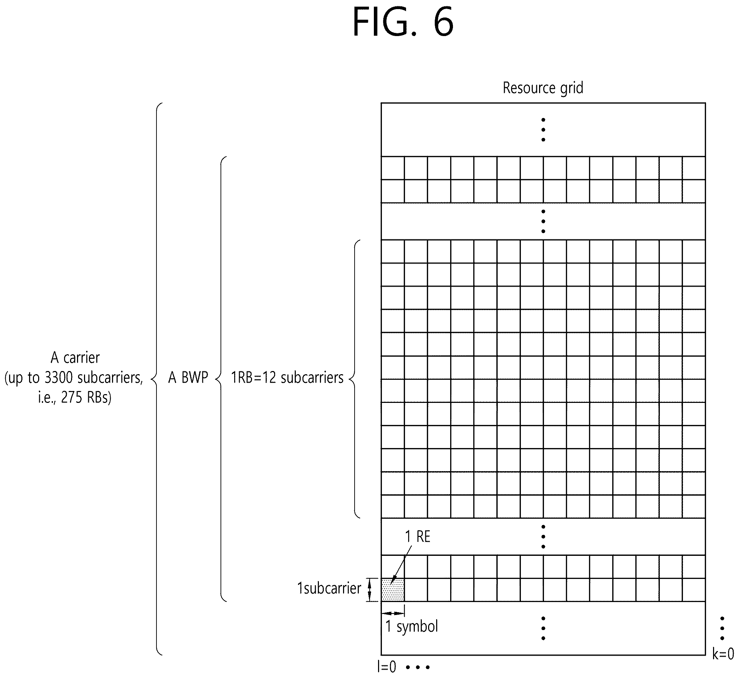

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

A bandwidth part (BWP) may be a set of consecutive physical resource blocks (PRBs) in a given numerology. The PRB may be selected from consecutive sub-sets of common resource blocks (CRBs) for the given numerology on a given carrier

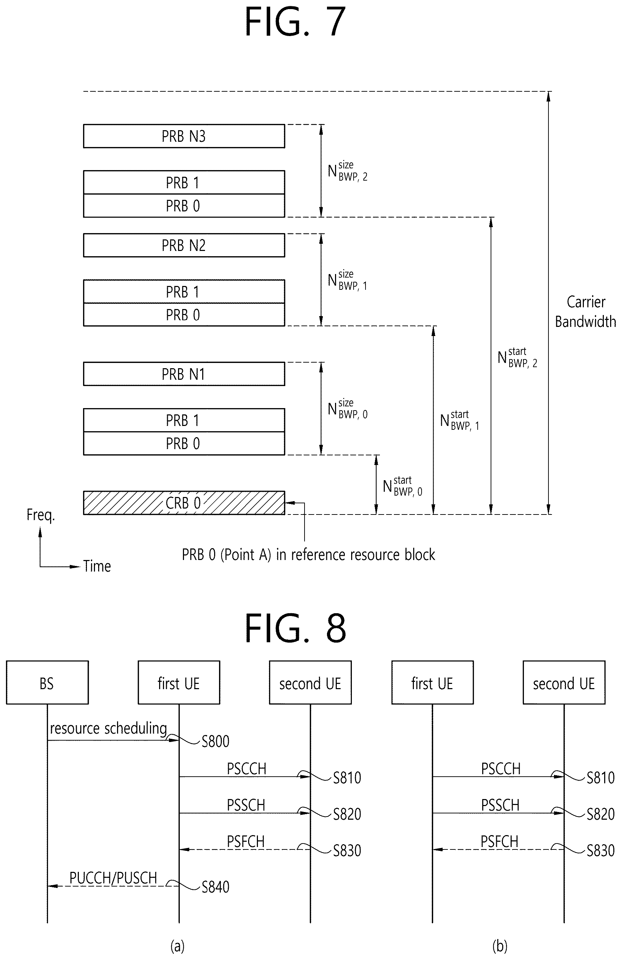

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL)-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In the present disclosure, a PSCCH may be replaced with a control channel, a physical control channel, a control channel related to sidelink, a physical control channel related to sidelink, etc. In the present disclosure, a PSSCH may be replaced with a shared channel, a physical shared channel, a shared channel related to sidelink, a physical shared channel related to sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in a resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 8, in a resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

For example, SCI carried on PSCCH may be a 1st-stage SCI, which may transport sidelink scheduling information. For example, SCI format 1-A may be used for the scheduling of PSSCH and 2nd-stage-SCI on PSSCH. For example, SCI carried on PSSCH may be a 2nd-stage SCI, which may transport sidelink scheduling information.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Here, an example of a procedure for transmitting PSFCH is described.

A UE may be indicated by an SCI format scheduling a PSSCH reception to transmit a PSFCH with HARQ-ACK information in response to the PSSCH reception.

The UE may provide HARQ-ACK information that includes ACK or NACK, or only NACK.

A UE may be provided, by sl-PSFCH-Period-r16, a number of slots in a resource pool for a period of PSFCH transmission occasion resources. If the number is zero, PSFCH transmissions from the UE in the resource pool may be disabled.

A UE may expect that a slot $t'^{SL}_k$ ($0 \le k < T'_{max}$) has a PSFCH transmission occasion resource if $k \bmod N^{\mathrm{PSFCH}}_{\mathrm{PSSCH}} = 0$, where $t'^{SL}_k$ may be defined in TS 38.214, and $T'_{max}$ may be a number of slots that belong to the resource pool within 10240 msec according to TS 38.214, and $N^{\mathrm{PSFCH}}_{\mathrm{PSSCH}}$ may be provided by sl-PSFCH-Period-r16.

If a UE receives a PSSCH in a resource pool and the HARQ feedback enabled/disabled indicator field in an associated SCI format 2-A or a SCI format 2-B has value 1, the UE may provide the HARQ-ACK information in a PSFCH transmission in the resource pool. The UE may transmit the PSFCH in a first slot that includes PSFCH resources and is at least a number of slots, provided by sl-MinTimeGapPSFCH-r16, of the resource pool after a last slot of the PSSCH reception.

Referring to (a) of FIG. 8, in step S840, the first UE may transmit SL HARQ feedback to the base station through the PUCCH and/or the PUSCH.

For example, PSFCH reception may be performed. For example, the MAC entity may, for each PSSCH transmission, perform the HARQ-Based (sidelink) RLF Detection procedure. For example, the MAC entity may, for each PSSCH transmission, if the PSSCH transmission occurs for a pair of Source Layer-2 ID and Destination Layer-2 ID corresponding to a PC5-RRC connection which has been established by upper layers, perform the HARQ-Based (sidelink) RLF Detection procedure.

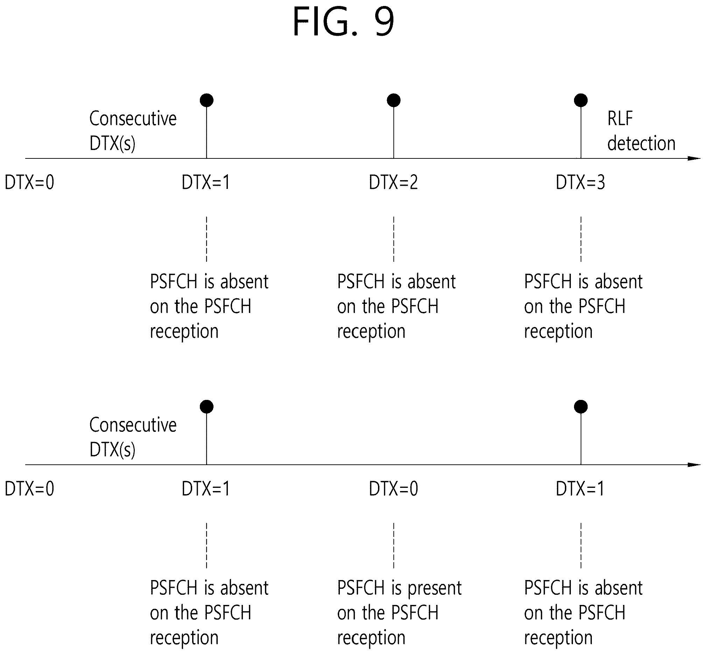

FIG. 9 shows a procedure related to RLF detection, based on an embodiment of the present disclosure. The embodiment of FIG. 9 may be combined with various embodiments of the present disclosure.

Referring to FIG. 9, for example, HARQ-based (sidelink) RLF detection may be performed.

For example, when a transmitting UE does not receive a physical feedback channel (e.g., PSFCH) (e.g., HARQ ACK or HARQ NACK) from a receiving UE after transmitting a physical control channel/physical shared channel (e.g., PSCCH/PSSCH), the transmitting UE may increment a discontinuous transmission (DTX) count by 1 and may declare (or indicate or detect) (SL) RLF when the DTX count reaches a threshold. For example, when the (SL) RLF is declared (or indicated or detected) for a unicast link, the UE may release a PC5 RRC connection for which the (SL) RLF is declared (or indicated or detected) and may report (or indicate) to upper layers (e.g., a V2X layer) a PC5 link identifier related to the released PC5 RRC connection. For example, the UE may report (or indicate) to a base station that an (SL) RLF has occurred to the base station. For example, when the UE reports (or indicates), the UE may report (or indicate), together, unicast link information (e.g., a destination Layer-2 ID) for which the RLF has occurred and a cause related to the (SL) RLF (e.g., (SL) RLF).

For example, the HARQ-based (sidelink) RLF detection procedure may be used to detect (sidelink) RLF based on a number of consecutive DTX on PSFCH reception occasions for a PC5-RRC connection.

For example, RRC may configure the following parameter to control HARQ-based (sidelink) RLF detection. For example, maximum DTX (e.g., (sl-)maxNumConsecutiveDTX) may be configured. For example, maximum DTX (e.g., (sl-)maxNumConsecutiveDTX) may indicate the maximum number of consecutive HARQ DTX before triggering (sidelink) RLF.

For example, the following UE variable may be used for HARQ-based (sidelink) RLF detection. For example, DTX (e.g., numConsecutiveDTX), which is maintained for each PC5-RRC connection, may be configured.

For example, the (sidelink) HARQ Entity may (re-)initialize numConsecutiveDTX to zero for each PC5-RRC connection which has been established by upper layers, if any, upon establishment of the PC5-RRC connection or (re) configuration of maximum DTX (e.g., (sl-)maxNumConsecutiveDTX). For example, as shown in FIG. 9, maximum DTX (e.g., (sl-)maxNumConsecutiveDTX) may be configured to 3. For example, maximum DTX (e.g., (sl-)maxNumConsecutiveDTX) may not be limited to 3. For example, maximum DTX (e.g., (sl-)maxNumConsecutiveDTX) may be (re) configured to a value other than 3.

For example, the (sidelink) HARQ Entity may, for each PSFCH reception occasion associated to the PSSCH transmission, increment DTX (e.g., numConsecutiveDTX) by 1. For example, the (sidelink) HARQ Entity may, for each PSFCH reception occasion associated to the PSSCH transmission, if PSFCH reception is absent on the PSFCH reception occasion, increment DTX (e.g., numConsecutiveDTX) by 1.

For example, the (sidelink) HARQ Entity may, for each PSFCH reception occasion associated to the PSSCH transmission, indicate HARQ-based (sidelink) RLF detection to RRC. For example, the (sidelink) HARQ Entity may, for each PSFCH reception occasion associated to the PSSCH transmission, if DTX (e.g., numConsecutiveDTX) reaches maximum DTX (e.g., (sl-)maxNumConsecutiveDTX), indicate HARQ-based (sidelink) RLF detection to RRC. For example, the (sidelink) HARQ Entity may, for each PSFCH reception occasion associated to the PSSCH transmission, if PSFCH reception is absent on the PSFCH reception occasion, increment DTX (e.g., numConsecutiveDTX) by 1, if DTX (e.g., numConsecutiveDTX) reaches maximum DTX (e.g., (sl-)maxNumConsecutiveDTX), indicate HARQ-based (sidelink) RLF detection to RRC. For example, as shown in FIG. 9, maximum DTX (e.g., (sl-)maxNumConsecutiveDTX) may be configured to 3. For example, as shown in FIG. 9, the (sidelink) HARQ Entity may, for each PSFCH reception occasion associated to the PSSCH transmission, if DTX (e.g., numConsecutiveDTX) reaches maximum DTX (e.g., (sl-)maxNumConsecutiveDTX) of 3, indicate HARQ-based (sidelink) RLF detection to RRC. For example, maximum DTX (e.g., (sl-)maxNumConsecutiveDTX) may not be limited to 3. For example, maximum DTX (e.g., (sl-)maxNumConsecutiveDTX) may be (re)configured to a value other than 3.

For example, the (sidelink) HARQ Entity may, for each PSFCH reception occasion associated to the PSSCH transmission, re-initialize DTX (e.g., numConsecutiveDTX) to zero. For example, the (sidelink) HARQ Entity may, for each PSFCH reception occasion associated to the PSSCH transmission, if PSFCH reception is not absent on the PSFCH reception occasion (e.g., else for "if PSFCH reception is absent on the PSFCH reception occasion"), re-initialize DTX (e.g., numConsecutiveDTX) to zero.

In FIG. 9, maximum DTX (e.g., (sl-)maxNumConsecutiveDTX) is shown as being configured to 3, but is not limited thereto. For example, maximum DTX (e.g., (sl-)maxNumConsecutiveDTX) may be (re)configured to a value other than 3.

In a multi-carrier operation or carrier aggregation (CA), there may be a plurality of carriers related to a PC5-RRC connection. There may be a problem related to whether to detect an RLF and to indicate an RLF to upper layers only when a maximum of a number of DTXs is detected in some carriers.

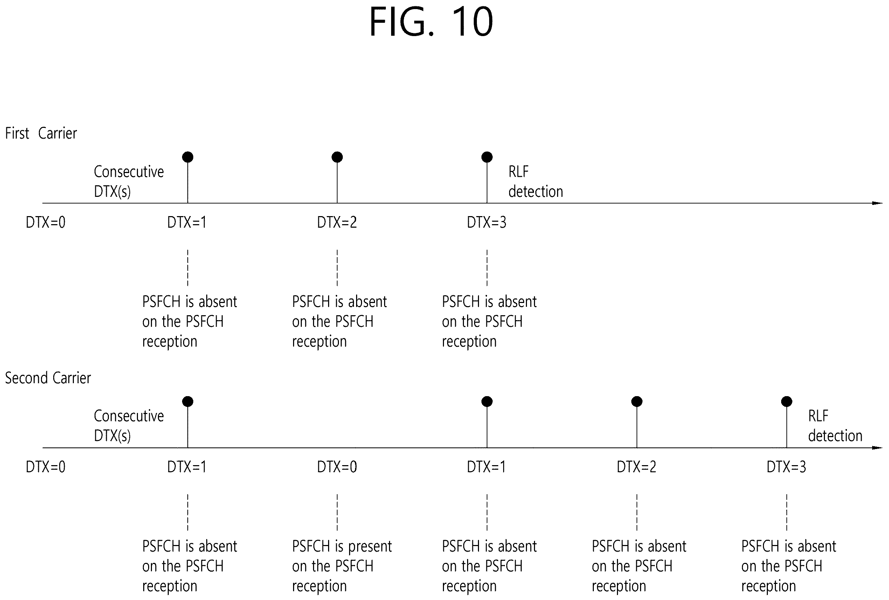

FIG. 10 shows a procedure related to RLF detection, based on an embodiment of the present disclosure. The embodiment of FIG. 10 may be combined with various embodiments of the present disclosure.

Referring to FIG. 10, for example, HARQ-based (Sidelink) RLF detection may be performed.

For example, PSFCH reception may be performed. For example, the MAC entity may, for each PSSCH transmission, perform the HARQ-Based (sidelink) RLF Detection procedure. For example, the MAC entity may, for each PSSCH transmission, if the PSSCH transmission occurs for a pair of Source Layer-2 ID and Destination Layer-2 ID corresponding to a PC5-RRC connection which has been established by upper layers, perform the HARQ-Based (sidelink) RLF Detection procedure.

For example, the HARQ-based (sidelink) RLF detection procedure may be used to detect (sidelink) RLF based on a number of consecutive DTX on PSFCH reception occasions for a PC5-RRC connection. For example, for each carrier associated with a PC5-RRC connection, the HARQ-based (sidelink) RLF detection procedure may be used to detect (sidelink) RLF based on a number of consecutive DTX on PSFCH reception occasions for a PC5-RRC connection.

For example, RRC may configure the following parameter to control HARQ-based (sidelink) RLF detection. For example, maximum DTX (e.g., (sl-)maxNumConsecutiveDTX) may be configured. For example, maximum DTX (e.g., (sl-) maxNumConsecutiveDTX) may indicate the maximum number of consecutive HARQ DTX before triggering (sidelink) RLF.

For example, the following UE variable may be used for HARQ-based (sidelink) RLF detection. For example, DTX (e.g., numConsecutiveDTX), which is maintained for each PC5-RRC connection, may be configured. For example, DTX (e.g., numConsecutiveDTX), which is maintained per carrier per PC5-RRC connection, may be configured.

For example, the (sidelink) HARQ Entity may (re-)initialize numConsecutiveDTX to zero for each PC5-RRC connection which has been established by upper layers, if any, upon establishment of the PC5-RRC connection or (re) configuration of maximum DTX (e.g., (sl-)maxNumConsecutiveDTX). For example, for each carrier associated with a PC5-RRC connection, the (sidelink) HARQ Entity may (re-)initialize numConsecutiveDTX to zero for each PC5-RRC connection which has been established by upper layers, if any, upon establishment of the PC5-RRC connection or (re) configuration of maximum DTX (e.g., (sl-)maxNumConsecutiveDTX). For example, as shown in FIG. 10, maximum DTX (e.g., (sl-)maxNumConsecutiveDTX) may be configured to 3. For example, maximum DTX (e.g., (sl-)maxNumConsecutiveDTX) may not be limited to 3. For example, maximum DTX (e.g., (sl-)maxNumConsecutiveDTX) may be (re) configured to a value other than 3.

For example, the (sidelink) HARQ Entity may, for each PSFCH reception occasion associated to the PSSCH transmission, increment DTX (e.g., numConsecutiveDTX) by 1. For example, for each carrier associated with a PC5-RRC connection, the (sidelink) HARQ Entity may, for each PSFCH reception occasion associated to the PSSCH transmission, increment DTX (e.g., numConsecutiveDTX) by 1. For example, for each carrier associated with a PC5-RRC connection, the (sidelink) HARQ Entity may, for each PSFCH reception occasion associated to the PSSCH transmission, if PSFCH reception is absent on the PSFCH reception occasion, increment DTX (e.g., numConsecutiveDTX) by 1. For example, for (SL) operation with shared spectrum channel access, UE may increase the DTX (e.g., numConsecutiveDTX) by 1 when the UE fails to detect the HARQ feedback on all the associated PSFCH resources.

For example, the (sidelink) HARQ Entity may, for each PSFCH reception occasion associated to the PSSCH transmission, trigger the TX carrier (re-)selection procedure. For example, for each carrier associated with a PC5-RRC connection, the (sidelink) HARQ Entity may, for each PSFCH reception occasion associated to the PSSCH transmission, trigger the TX carrier (re-)selection procedure. For example, for each carrier associated with a PC5-RRC connection, the (sidelink) HARQ Entity may, for each PSFCH reception occasion associated to the PSSCH transmission, if more than one selected carrier is considered as the carriers for HARQ-based (sidelink) RLF detection, trigger the TX carrier (re-)selection procedure. For example, for each carrier associated with a PC5-RRC connection, the (sidelink) HARQ Entity may, for each PSFCH reception occasion associated to the PSSCH transmission, if DTX (e.g., numConsecutiveDTX) reaches maximum DTX (e.g., (sl-)maxNumConsecutiveDTX) for a carrier applied for HARQ-based (sidelink) RLF detection, trigger the TX carrier (re-)selection procedure. For example, for each carrier associated with a PC5-RRC connection, the (sidelink) HARQ Entity may, for each PSFCH reception occasion associated to the PSSCH transmission, if more than one selected carrier is considered as the carriers for HARQ-based (sidelink) RLF detection, if DTX (e.g., numConsecutiveDTX) reaches maximum DTX (e.g., (sl-)maxNumConsecutiveDTX) for a carrier applied for HARQ-based (sidelink) RLF detection, trigger the TX carrier (re-)selection procedure. For example, in trigger the TX carrier (re-)selection procedure, the TX carrier (re-)selection procedure may be triggered as described in TX carrier (re)selection below. For example, in more than one selected carrier, more than one carrier may be selected as described in TX carrier (re)selection below. For example, as shown in FIG. 10, for a first carrier among carriers associated with a PC5-RRC connection, the (sidelink) HARQ Entity may, for each PSFCH reception occasion associated to the PSSCH transmission, if the first carrier among more than one selected carrier is considered as the carriers for HARQ-based (sidelink) RLF detection, if DTX (e.g., numConsecutiveDTX) reaches maximum DTX (e.g., (sl-)maxNumConsecutiveDTX) of 3 for the first carrier, which is a carrier applied for HARQ-based (sidelink) RLF detection, trigger the TX carrier (re-)selection procedure. For example, maximum DTX (e.g., (sl-) maxNumConsecutiveDTX) may not be limited to 3. For example, maximum DTX (e.g., (sl-)maxNumConsecutiveDTX) may be (re)configured to a value other than 3.

For example, the (sidelink) HARQ Entity may, for each PSFCH reception occasion associated to the PSSCH transmission, indicate HARQ-based (sidelink) carrier failure to RRC. For example, for each carrier associated with a PC5-RRC connection, the (sidelink) HARQ Entity may, for each PSFCH reception occasion associated to the PSSCH transmission, indicate HARQ-based (sidelink) carrier failure to RRC. For example, for each carrier associated with a PC5-RRC connection, the (sidelink) HARQ Entity may, for each PSFCH reception occasion associated to the PSSCH transmission, if more than one selected carrier is considered as the carriers for HARQ-based (sidelink) RLF detection, indicate HARQ-based (sidelink) carrier failure to RRC. For example, for each carrier associated with a PC5-RRC connection, the (sidelink) HARQ Entity may, for each PSFCH reception occasion associated to the PSSCH transmission, if DTX (e.g., numConsecutiveDTX) reaches maximum DTX (e.g., (sl-)maxNumConsecutiveDTX) for a carrier applied for HARQ-based (sidelink) RLF detection, indicate HARQ-based (sidelink) carrier failure to RRC. For example, for each carrier associated with a PC5-RRC connection, the (sidelink) HARQ Entity may, for each PSFCH reception occasion associated to the PSSCH transmission, if more than one selected carrier is considered as the carriers for HARQ-based (sidelink) RLF detection, if DTX (e.g., numConsecutiveDTX) reaches maximum DTX (e.g., (sl-)maxNumConsecutiveDTX) for a carrier applied for HARQ-based (sidelink) RLF detection, indicate HARQ-based (sidelink) carrier failure to RRC. For example, in more than one selected carrier, more than one carrier may be selected as described in TX carrier (re) selection below. For example, as shown in FIG. 10, for a first carrier among carriers associated with a PC5-RRC connection, the (sidelink) HARQ Entity may, for each PSFCH reception occasion associated to the PSSCH transmission, if the first carrier among more than one selected carrier is considered as the carriers for HARQ-based (sidelink) RLF detection, if DTX (e.g., numConsecutiveDTX) reaches maximum DTX (e.g., (sl-)maxNumConsecutiveDTX) of 3 for the first carrier, which is a carrier applied for HARQ-based (sidelink) RLF detection, indicate HARQ-based (sidelink) carrier failure to RRC. For example, maximum DTX (e.g., (sl-)maxNumConsecutiveDTX) may not be limited to 3. For example, maximum DTX (e.g., (sl-)maxNumConsecutiveDTX) may be (re)configured to a value other than 3.

For example, the (sidelink) HARQ Entity may, for each PSFCH reception occasion associated to the PSSCH transmission, indicate HARQ-based (sidelink) RLF detection to RRC. For example, for each carrier associated with a PC5-RRC connection, the (sidelink) HARQ Entity may, for each PSFCH reception occasion associated to the PSSCH transmission, indicate HARQ-based (sidelink) RLF detection to RRC. For example, for each carrier associated with a PC5-RRC connection, the (sidelink) HARQ Entity may, for each PSFCH reception occasion associated to the PSSCH transmission, if more than one selected carrier is considered as the carriers for HARQ-based (sidelink) RLF detection, indicate HARQ-based (sidelink) RLF detection to RRC. For example, for each carrier associated with a PC5-RRC connection, the (sidelink) HARQ Entity may, for each PSFCH reception occasion associated to the PSSCH transmission, if DTX (e.g., numConsecutiveDTX) reaches maximum DTX (e.g., (sl-)maxNumConsecutiveDTX) for all carrier applied for HARQ-based (sidelink) RLF detection, indicate HARQ-based (sidelink) RLF detection to RRC. For example, for each carrier associated with a PC5-RRC connection, the (sidelink) HARQ Entity may, for each PSFCH reception occasion associated to the PSSCH transmission, if more than one selected carrier is considered as the carriers for HARQ-based (sidelink) RLF detection, if DTX (e.g., numConsecutiveDTX) reaches maximum DTX (e.g., (sl-)maxNumConsecutiveDTX) for all carrier applied for HARQ-based (sidelink) RLF detection, indicate HARQ-based (sidelink) RLF detection to RRC. For example, in more than one selected carrier, more than one carrier may be selected as described in TX carrier (re) selection below. For example, as shown in FIG. 10, for a first carrier and a second carrier, which are carriers associated with a PC5-RRC connection, the (sidelink) HARQ Entity may, for each PSFCH reception occasion associated to the PSSCH transmission, if the first carrier and the second carrier, which are more than one selected carrier is considered as the carriers for HARQ-based (sidelink) RLF detection, if DTX (e.g., numConsecutiveDTX) reaches maximum DTX (e.g., (sl-)maxNumConsecutiveDTX) of 3 for both the first carrier and the second carrier, which are carriers applied for HARQ-based (sidelink) RLF detection, indicate HARQ-based (sidelink) RLF detection to RRC. For example, maximum DTX (e.g., (sl-)maxNumConsecutiveDTX) may not be limited to 3. For example, maximum DTX (e.g., (sl-)maxNumConsecutiveDTX) may be (re)configured to a value other than 3.

For example, the (sidelink) HARQ Entity may, for each PSFCH reception occasion associated to the PSSCH transmission, if DTX (e.g., numConsecutiveDTX) reaches maximum DTX (e.g., (sl-)maxNumConsecutiveDTX), indicate HARQ-based (sidelink) RLF detection to RRC. For example, for each carrier associated with a PC5-RRC connection the (sidelink) HARQ Entity may, for each PSFCH reception occasion associated to the PSSCH transmission, if DTX (e.g., numConsecutiveDTX) reaches maximum DTX (e.g., (sl-)maxNumConsecutiveDTX), indicate HARQ-based (sidelink) RLF detection to RRC. For example, for each carrier associated with a PC5-RRC connection the (sidelink) HARQ Entity may, for each PSFCH reception occasion associated to the PSSCH transmission, if more than one selected carrier is not considered as the carriers for HARQ-based (sidelink) RLF detection (e.g., else for "if more than one selected carrier is considered as the carriers for HARQ-based (sidelink) RLF detection"), if DTX (e.g., numConsecutiveDTX) reaches maximum DTX (e.g., (sl-)maxNumConsecutiveDTX), indicate HARQ-based (sidelink) RLF detection to RRC. For example, in more than one selected carrier, more than one carrier may be selected as described in TX carrier (re) selection below. For example, as shown in FIG. 10, maximum DTX (e.g., (sl-)maxNumConsecutiveDTX) may be configured to 3. For example, as shown in FIG. 10, for each carrier associated with a PC5-RRC connection, the (sidelink) HARQ Entity may, for each PSFCH reception occasion associated to the PSSCH transmission, if more than one selected carrier is not considered as the carriers for HARQ-based (sidelink) RLF detection (e.g., else for "if more than one selected carrier is considered as the carriers for HARQ-based (sidelink) RLF detection"), if DTX (e.g., numConsecutiveDTX) reaches maximum DTX (e.g., (sl-)maxNumConsecutiveDTX) of 3, indicate HARQ-based (sidelink) RLF detection to RRC. For example, maximum DTX (e.g., (sl-)maxNumConsecutiveDTX) may not be limited to 3. For example, maximum DTX (e.g., (sl-)maxNumConsecutiveDTX) may be (re)configured to a value other than 3.

For example, the (sidelink) HARQ Entity may, for each PSFCH reception occasion associated to the PSSCH transmission, re-initialize DTX (e.g., numConsecutiveDTX) to zero. For example, for each carrier associated with a PC5-RRC connection, the (sidelink) HARQ Entity may, for each PSFCH reception occasion associated to the PSSCH transmission, re-initialize DTX (e.g., numConsecutiveDTX) to zero. For example, for each carrier associated with a PC5-RRC connection, the (sidelink) HARQ Entity may, for each PSFCH reception occasion associated to the PSSCH transmission, if PSFCH reception is not absent on the PSFCH reception occasion (e.g., else for "if PSFCH reception is absent on the PSFCH reception occasion"), re-initialize DTX (e.g., numConsecutiveDTX) to zero.

For example, a transmitting UE may, in a specific (sidelink) carrier (e.g., (or, one of selected carriers or all selected carriers or all configured available carriers)), declare (sidelink) RLF (e.g., if discontiuous transmission (DTX) (e.g., an event in which PSFCH for PSCCH/PSSCH transmission is not received) occurs by a pre-configured threshold in the specific carrier, the transmitting UE may declare RLF in the corresponding carrier) and, when the declaration is made, may trigger a carrier re-selection procedure to replace a carrier in which RLF occurred with another carrier. For example, when (sidelink) RLF is declared in a specific (sidelink) carrier (e.g., (or, one of selected carriers or all selected carriers or all configured available carriers)), a carrier re-selection procedure may be triggered and a new carrier may be re-selected. For example, resources used or selected in a carrier in which RLF occurred may be released, and resources to be used in a new carrier may be re-selected (e.g., the UE may trigger resource re-selection so that newly re-selected resources can be used in a newly selected carrier) and mapped to the newly selected carrier. For example, the transmitting UE may select a newly selected carrier and new resources to be used in the carrier, and may transmit (sidelink) data using the selected carrier and the selected resources.

By not indicating an RLF when a maximum of a number of DTXs is detected only in some carriers, by indicating an RLF even when a maximum of a number of DTXs is not detected in all of a plurality of carriers, it is possible to prevent a PC5-RRC connection from being released due to an RLF being indicated even though there is an available carrier in which a maximum of a number of DTXs is not detected. By indicating an RLF only when a maximum of a number of DTXs is detected in a plurality of carriers, by indicating an RLF even when a maximum of a number of DTXs is not detected in all of a plurality of carriers, it is possible to prevent a PC5-RRC connection from being released due to an RLF being indicated even though there is an available carrier in which a maximum of a number of DTXs is not detected. By releasing a PC5-RRC connection only when a maximum of a number of DTXs is detected in a plurality of carriers, it is possible to prevent a PC5-RRC connection from being released even though there is an available carrier in which a maximum of a number of DTXs is not detected.

In FIG. 10, maximum DTX (e.g., (sl-)maxNumConsecutiveDTX) is shown as being configured to 3, but is not limited thereto. For example, maximum DTX (e.g., (sl-)maxNumConsecutiveDTX) may be (re)configured to a value other than 3.

For example, according to an embodiment of the present disclosure, a DRX configuration for a DRX operation of an unmanned aerial vehicle (UAV) type UE may be proposed.

For example, according to an embodiment of the present disclosure, a UAV-UE may have different communication environments with a base station depending on an altitude (e.g., altitude or height). For example, as the altitude increases, LOS between a UAV-UE and a base station may be ensured compared to a lower altitude so that more signals can be transmitted and received. For example, at a lower altitude, it may be difficult to ensure a LOS environment compared to a higher altitude (e.g., because obstacles may be more abundant at a lower altitude compared to a higher altitude). For example, at a lower altitude, a communication environment (e.g., channel condition) between a UAV-UE and a base station may be worse compared to a higher altitude. For example, at a higher altitude, a communication environment (e.g., channel condition) between a UAV-UE and a base station may be better compared to a lower altitude.

For example, according to an embodiment of the present disclosure, DRX configuration of Uu DRX may be defined differently depending on an altitude so that, when a UAV-UE is located at an altitude equal to or greater than a pre-configured threshold altitude, the UAV-UE may apply a Uu DRX configuration defined according to the altitude in advance. For example, a base station may configure a Uu DRX configuration so that it guarantees more DRX active time (e.g., or less DRX active time) to a UAV-UE at a higher altitude. For example, as the altitude increases, a drx-onDurationTimer may be configured to be longer (e.g., or shorter).

For example, according to an embodiment of the present disclosure, as the altitude increases, a timer (e.g., drx-onDurationTimer, drx-InactivityTimer, drx-RetransmissionTimerDL, drx-RetransmissionTimerUL, ps-TransmitOtherPeriodicCSI, ps-TransmitPeriodicL1-RSRP, drx-RetransmissionTimerSL) that guarantees an active time may be configured to have a longer length (e.g., or shorter length). For example, Table 3 may be an example of a DRX configuration per altitude (e.g., DRX configuration per height (or altitude)).

[Table 3]

| Altitude | DRX configuration |
|---|---|
| 0~300m | DRX configuration "1" |
| 300~600m | DRX configuration "2" |
| 600~1500m | DRX configuration "3" |
| 1500~3000m | DRX configuration "4" |

For example, according to an embodiment of the present disclosure, as the altitude increases, a length of a DRX cycle may be configured to be longer (e.g., or shorter). For example, Table 4 may be an example of a DRX cycle per altitude (e.g., DRX cycle per height (or altitude)).

[Table 4]

| Altitude | DRX cycle |
|---|---|
| 0~300m | DRX cycle "1" |
| 300~600m | DRX cycle "2" |
| 600~1500m | DRX cycle "3" |
| 1500~3000m | DRX cycle "4" |

For example, according to an embodiment of the present disclosure, when performing sidelink DRX between sidelink UEs, a receiving UE may perform an SL DRX operation by applying an SL DRX configuration defined per altitude. For example, when a receiving UE applies an SL DRX configuration for groupcast/broadcast communication, the receiving UE may perform a receiving operation and a transmitting operation of a groupcast/broadcast service by applying an SL DRX configuration defined per its altitude. For example, Table 5 may be an example of a sidelink DRX configuration per altitude (e.g., sidelink DRX configuration per height (or altitude)).

[Table 5]

| Altitude | Sidelink DRX configuration |
|---|---|
| 0~300m | SL DRX configuration "1" |
| 300~600m | SL DRX configuration "2" |
| 600~1500m | SL DRX configuration "3" |
| 1500~3000m | SL DRX configuration "4" |

For example, according to an embodiment of the present disclosure, as the altitude increases, a length of a sidelink DRX cycle may be configured to be longer (e.g., or shorter). For example, Table 6 may be an example of a sidelink DRX cycle per altitude (e.g., sidelink DRX cycle per height (or altitude)).

[Table 6]

| Altitude | Sidelink DRX cycle |
|---|---|
| 0~300m | SL DRX cycle "1" |
| 300~600m | SL DRX cycle "2" |
| 600~1500m | SL DRX cycle "3" |
| 1500~3000m | SL DRX cycle "4" |

For example, according to an embodiment of the present disclosure, to support an SL DRX operation for sidelink unicast communication, a receiving UE may transmit its altitude information, sidelink unicast service-related QoS information, and location information to a transmitting UE as auxiliary information (e.g., via SCI or MAC CE or PC5 RRC message). For example, a transmitting UE may determine an SL DRX configuration of a receiving UE based on auxiliary information (e.g., altitude information and sidelink unicast service-related QoS information and location information) transmitted by the receiving UE and may transmit the determined SL DRX configuration to the receiving UE through a PC5 RRC message. For example, when a transmitting UE is in an RRC connected state with a serving base station, the transmitting UE may transmit auxiliary information (e.g., altitude information and sidelink unicast service-related QoS information and location information) received from the receiving UE to the serving base station via sidelink UE information. For example, a base station may determine an SL DRX configuration of a receiving UE by referring to auxiliary information of the receiving UE received from a transmitting UE and may transmit the determined SL DRX configuration of the receiving UE to the transmitting UE. For example, a transmitting UE may transmit the SL DRX configuration of the receiving UE received from a base station to the receiving UE through a PC5 RRC message. For example, when a transmitting UE is in an RRC INACTIVE/IDLE state, if the transmitting UE receives auxiliary information (e.g., altitude information and sidelink unicast service-related QoS information and location information) from a receiving UE, the transmitting UE may transition to an RRC connected state and may report auxiliary information transmitted by the receiving UE to a serving base station (e.g., via sidelink UE information).

For example, according to an embodiment of the present disclosure, a method of defining Uu DRX configuration and SL DRX configuration per altitude of a UAV UE may be proposed.

For example, according to an embodiment of the present disclosure, a method of defining different Uu DRX configurations and SL DRX configurations per moving path (e.g., moving path 1, moving path 2, moving path 3, etc.) of a UAV UE may be proposed. For example, because a moving path of each UE may be predefined in advance, the amount of transmitting and receiving traffic may differ per path. For example, in the present disclosure, different Uu DRX configurations and SL DRX configurations per moving path (e.g., moving path 1, moving path 2, moving path 3, etc.) of a UAV UE may be defined so that a UAV UE moving along different moving paths may apply different Uu DRX configurations or SL DRX configurations.

The Uu DRX configuration mentioned in the present disclosure may include at least one of the following parameters.

- drx-onDurationTimer: the duration at the beginning of a DRX cycle;
- drx-SlotOffset: the delay before starting the drx-onDurationTimer;
- drx-InactivityTimer: the duration after the PDCCH occasion in which a PDCCH indicates a new UL, DL or SL transmission for the MAC entity;
- drx-RetransmissionTimerDL (per DL HARQ process except for the broadcast process): the maximum duration until a DL retransmission is received;
- drx-RetransmissionTimerUL (per UL HARQ process): the maximum duration until a grant for UL retransmission is received;
- drx-LongCycleStartOffset: the Long DRX cycle and drx-StartOffset which defines the subframe where the Long and Short DRX cycle starts;
- drx-ShortCycle (optional): the Short DRX cycle;
- drx-ShortCycleTimer (optional): the duration the UE shall follow the Short DRX cycle;
- drx-HARQ-RTT-TimerDL (per DL HARQ process except for the broadcast process): the minimum duration before a DL assignment for HARQ retransmission is expected by the MAC entity;
- drx-HARQ-RTT-TimerUL (per UL HARQ process): the minimum duration before a UL HARQ retransmission grant is expected by the MAC entity;
- drx-RetransmissionTimerSL (per SL HARQ process): the maximum duration until a grant for SL retransmission is received;
- drx-HARQ-RTT-TimerSL (per SL HARQ process): the minimum duration before an SL retransmission grant is expected by the MAC entity;
- drx-LastTransmissionUL (optional): the configuration to start drx-HARQ-RTT-TimerUL after the last transmission within a bundle;
- ps-Wakeup (optional): the configuration to start associated drx-onDurationTimer in case DCP is monitored but not detected;
- ps-TransmitOtherPeriodicCSI (optional): the configuration to report periodic CSI that is not L1-RSRP on PUCCH during the time duration indicated by drx-onDurationTimer in case DCP is configured but associated drx-onDurationTimer is not started;
- ps-TransmitPeriodicL1-RSRP (optional): the configuration to transmit periodic CSI that is L1-RSRP on PUCCH during the time duration indicated by drx-onDurationTimer in case DCP is configured but associated drx-onDurationTimer is not started;
- downlinkHARQ-FeedbackDisabled (optional): the configuration to disable HARQ feedback per DL HARQ process;
- uplinkHARQ-Mode (optional): the configuration to set HARQmodeA or HARQmodeB per UL HARQ process.

The following Uu DRX timer mentioned in the present disclosure may be used for the following purpose.

- drx-HARQ-RTT-TimerSL timer: a duration in which a Tx UE (e.g., a UE that supports Uu DRX operation) that performs sidelink communication based on sidelink resource allocation mode 1 does not perform PDCCH (e.g., or DCI) monitoring for sidelink mode 1 resource allocation from a base station
- drx-RetransmissionTimerSL timer: a duration in which a Tx UE (e.g., a UE that supports Uu DRX operation) that performs sidelink communication based on sidelink resource allocation mode 1 performs PDCCH (e.g., or DCI) monitoring for sidelink mode 1 resource allocation from a base station

In the present disclosure, a (sidelink) DRX configuration may include at least one parameter among the following.

- SL drx-onDurationTimer: the duration at the beginning of a SL DRX Cycle;
- SL drx-SlotOffset: the delay before starting the sl drx-onDurationTimer;
- SL drx-InactivityTimer: the duration after the PSCCH occasion in which a PSCCH indicates a new SL transmission for the MAC entity;
- SL drx-StartOffset: the subframe where the SL DRX cycle start;
- SL drx-Cycle: the SL DRX cycle;
- SL drx-HARQ-RTT-Timer (per HARQ process or per sidelink process): the minimum duration before an assignment for HARQ retransmission is expected by the MAC entity.
- SL drx-RetransmissionTimer (per HARQ process or per sidelink process): the maximum duration until a retransmission is received

In the present disclosure, the following (sidelink) DRX timers may be used for the following purposes.

- (sidelink) DRX onDuration timer: a duration in which a UE performing a (sidelink) DRX operation is to basically operate as an active time for receiving a PSCCH/PSSCH of a peer UE.
- (sidelink) DRX inactivity timer: a duration that extends the (sidelink) DRX onDuration duration, which is a duration in which a UE performing a (sidelink) DRX operation is to basically operate as an active time for receiving a PSCCH/PSSCH of a peer UE. For example, the (sidelink) DRX onDuration timer may be extended by the (sidelink) DRX inactivity timer duration. For example, when the UE receives a new packet (a new PSSCH transmission), the UE may start the (sidelink) DRX inactivity timer to extend the (sidelink) DRX onDuration timer.
- (sidelink) DRX HARQ RTT timer: a duration in which a UE performing a (sidelink) DRX operation operates in a sleep mode until receiving a retransmission packet transmitted by a peer UE (e.g., or a PSSCH allocation). For example, when the UE starts the (sidelink) DRX HARQ RTT timer, the UE may determine that the peer UE will not transmit a (sidelink) retransmission packet to the UE until the (sidelink) DRX HARQ RTT timer expires and may operate in the sleep mode during the timer.
- (sidelink) DRX retransmission timer: a duration in which a UE performing a (sidelink) DRX operation operates as an active time to receive a retransmission packet transmitted by a peer UE (e.g., or a PSSCH allocation). During the timer duration, the UE may monitor reception of a retransmission (sidelink) packet (e.g., or a PSSCH allocation) transmitted by the peer UE.

For example, names of timers (e.g., a (sidelink) DRX onduration timer, a (sidelink) DRX inactivity timer, a (sidelink) DRX HARQ RTT timer, a (sidelink) DRX retransmission timer, and so on) are exemplary, and timers that perform the same/similar function based on descriptions of the respective timers may be regarded as the same/similar timers regardless of the names thereof.

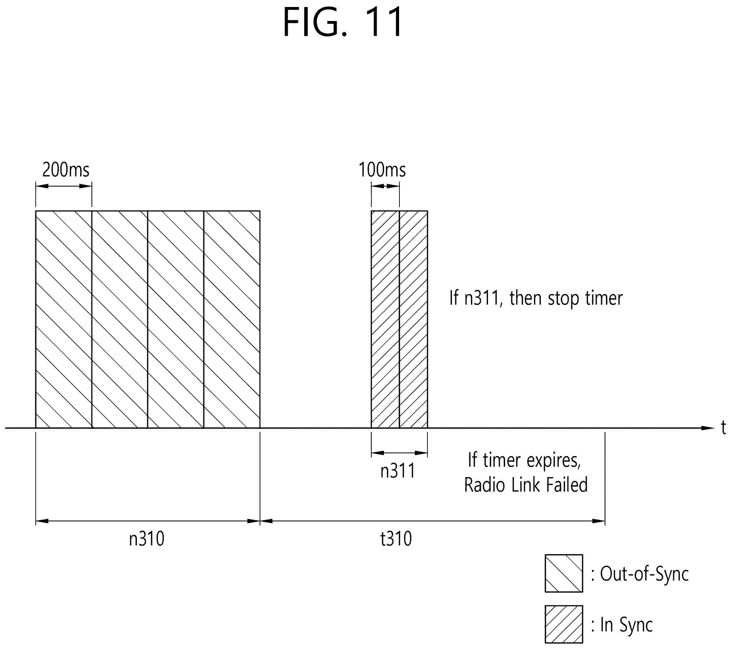

FIG. 11 shows an example related to RLF, based on an embodiment of the present disclosure. The embodiment of FIG. 11 may be combined with various embodiments of the present disclosure.

Referring to FIG. 11, For example, according to an embodiment of the present disclosure, in a technology (e.g., NR-Uu), a UE may monitor a radio link and may declare a radio link failure when the UE determines that the radio link is in a state in which communication is impossible. For example, a UE may declare a radio link failure under conditions such as follows.

- when OUT OF SYNC indications (e.g., N310) are consecutively received N times from a physical layer and IN SYNC indications (e.g., N311) are not received for a certain duration (e.g., T310)
- when a RACH procedure fails N times
- when retransmission exceeding a maximum number occurs in an RLC layer

For example, according to an embodiment of the present disclosure, an RLF parameter configuration for an RLF operation of an unmanned aerial vehicle (UAV) type UE may be as follows.

For example, RLF-TimersAndConstants may include the following.

- t310: t310 may be one of ms0, ms50, ms100, ms200, ms500, ms1000, ms2000, ms4000, or ms6000.
- n310: n310 may be one of n1, n2, n3, n4, n6, n8, n10, or n20.
- t311: t311 may be one of ms1000, ms3000, ms5000, ms10000, ms15000, ms20000, or ms30000.

For example, Table 7 may be an example of a constant related to RLF.

[Table 7]

| Constant | Usage |
|---|---|
| N310 | Maximum number of consecutive "out-of-sync" indications for the SpCell received from lower layers |

(continued)

| Constant | Usage |
|---|---|
| N311 | Maximum number of consecutive "in-sync" indications for the SpCell received from lower layers |

For example, a constant related to RLF may include the following.

- N310: N310 may be for usage related to maximum number of consecutive "out-of-sync" indications for the SpCell received from lower layers.
- N311: N311 may be for usage related to maximum number of consecutive "in-sync" indications for the SpCell received from lower layers.

For example, Table 8 may be an example of a counter related to RLF.

[Table 8]

| Counter | Reset | Incremented | When reaching max value |
|---|---|---|---|
| N310 | Upon reception of "in-sync" indication from lower layers; upon receiving *RRCReconfiguration* with *reconfiguration WithSync* for that cell group; upon initiating the connection re-establishment procedure. | Upon reception of "out-of-sync" from lower layer while the timer T310 is stopped. | Start timer T310 |
| N311 | Upon reception of "out-of-sync" indication from lower layers; upon receiving *RRCReconfiguration* with *reconfiguration WithSync* for that cell group; upon initiating the connection re-establishment procedure. | Upon reception of the "in-sync" from lower layer while the timer T310 is running. | Stop the timer T310. |

For example, a counter related to RLF may include the following.

- N310

    1. Reset: N310 may be reset upon reception of "in-sync" indication from lower layers. N310 may be reset upon receiving RRCReconfiguration with reconfigurationWithSync for that cell group. N310 may be reset upon initiating the connection re-establishment procedure.
    2. Incremented: N310 may be incremented upon reception of "out-of-sync" from lower layer while the timer T310 is stopped. N310 may be incremented.
    3. When reaching max value: T310 may be started.

- N311

    1. Reset: N311 may be reset upon reception of "out-of-sync" indication from lower layers. N311 may be reset upon receiving RRCReconfiguration with reconfigurationWithSync for that cell group. N311 may be reset upon initiating the connection re-establishment procedure.
    2. Incremented: N311 may be incremented upon reception of the "in-sync" from lower layer while the timer T310 is running.
    3. When reaching max value: T310 may be stopped.

For example, Table 9 may be an example of a timer related to RLF.

[Table 9]

| Timer | Start | Stop | At expiry |
|---|---|---|---|
| T310 | Upon detecting physical layer problems for the SpCell i.e. upon receiving N310 consecutive out-of-sync indications from lower layers. | Upon receiving N311 consecutive in-sync indications from lower layers for the SpCell, upon receiving RRCReconfiguration with *reconfigurationWithSync* for that cell group, upon reception of *MobilityFromNRCommand,* upon the reconfiguration of *rlf-TimersAndConstant,* upon initiating the connection re-establishment procedure, upon conditional reconfiguration execution i.e. when applying a stored RRCReconfiguration message including *reconfigurationWithSync* for that cell group, and upon initiating the MCG failure information procedure. Upon SCG release, if the T310 is kept in SCG. | If the T310 is kept in MCG: If AS security is not activated: go to RRC IDLE else: initiate the MCG failure information procedure as specified in 5.7.3b or the connection re-establishment procedure as specified in 5.3.7 or the procedure as specified in 5.3.10.3 if any DAPS bearer is configured. If the T310 is kept in SCG, Inform E-UTRAN/NR about the SCG radio link failure by initiating the SCG failure information procedure as specified in 5.7.3. |
| T311 | Upon initiating the RRC connection re-establishment procedure | Upon selection of a suitable NR cell, or upon selection of a suitable L2 U2N Relay UE, or a cell using another RAT. | Enter RRC IDLE |

For example, a timer related to RLF may include the following.

- T310

1. Start: T310 may be started upon detecting physical layer problems for the SpCell. For example, T310 may be started upon receiving N310 consecutive out-of-sync indications from lower layers.
2. Stop: T310 may be stopped upon receiving N311 consecutive in-sync indications from lower layers for the SpCell. T310 may be stopped upon receiving RRCReconfiguration with reconfigurationWithSync for that cell group. T310 may be stopped upon reception of MobilityFromNRCommand. T310 may be stopped upon reception of rlf-TimersAndConstant. T310 may be stopped upon the reconfiguration of rlf-TimersAndConstant. T310 may be stopped upon initiating the connection re-establishment procedure. T310 may be stopped upon conditional reconfiguration execution. For example, T310 may be stopped when applying a stored RRCReconfiguration message including reconfigurationWithSync for that cell group. T310 may be stopped upon initiating the MCG failure information procedure. T310 may be stopped upon SCG release, if the T310 is kept in SCG.
3. At expiry: If the T310 is kept in MCG: If AS security is not activated: may go to RRC_IDLE. If the T310 is kept in MCG: If AS security is activated: may initiate the MCG failure information procedure as specified in 5.7.3b or the connection re-establishment procedure or the procedure as specified in 3GPP TS 38.331 5.3.10.3 if any DAPS bearer is configured. If the T310 is kept in SCG, may inform E-UTRAN/NR about the SCG radio link failure by initiating the SCG failure information procedure.

- T311

1. Start: T311 may be started upon initiating the RRC connection re-establishment procedure.
2. Stop: T311 may be stopped upon selection of a suitable NR cell, or upon selection of a suitable L2 U2N Relay UE, or a cell using another RAT.
3. At expiry: T311 may be expired upon entering RRC_IDLE

In a high-altitude area where channel conditions are better, a uniform configuration may result in unnecessarily long T310 timers and high N310 thresholds. This may cause delays in detecting and processing out-of-sync events, thereby reducing overall network responsiveness. Conversely, in low-altitude areas where channel conditions are worse, short T310 timers and low N310 thresholds may cause frequent false alarms. This may cause early handovers and connection resets, degrading network performance.

For example, according to an embodiment of the present disclosure, a UAV-UE may have different communication environments with a base station depending on an altitude (e.g., altitude or height). For example, as the altitude increases, LOS between a UAV-UE and a base station may be ensured (e.g., because obstacles may be fewer compared to a lower altitude) so that more signals may be transmitted and received. For example, at a lower altitude, it may be difficult to ensure an LOS environment compared to a higher altitude (e.g., because obstacles may be more abundant at a lower altitude compared to a higher altitude). For example, at a lower altitude, a communication environment (e.g., channel condition) between a UAV-UE and a base station may be worse compared to a higher altitude. For example, at a higher altitude, a communication environment (e.g., channel condition) between a UAV-UE and a base station may be better compared to a lower altitude.

For example, according to an embodiment of the present disclosure, an RLF parameter configuration may be defined differently depending on an altitude so that, when a UAV-UE is located at an altitude equal to or greater than (e.g., or less than) a pre-configured threshold altitude, an RLF parameter configuration defined in advance according to the altitude may be applied. For example, a base station may configure an N310 value to be greater (e.g., or smaller) as the altitude increases. For example, a base station may configure an N310 value to be smaller (e.g., or greater) as the altitude decreases. For example, a base station may configure an N311 value to be greater (e.g., or smaller) as the altitude increases. For example, a base station may configure an N311 value to be smaller (e.g., or greater) as the altitude decreases. For example, a base station may configure a T310 value to be smaller (e.g., or greater) as the altitude increases. For example, a base station may configure a T310 value to be greater (e.g., or smaller) as the altitude decreases.

For example, according to the present disclosure, there may be an embodiment in which different RLF parameters are configured per altitude. For example, Table 10 may be an example of an RLF parameter per altitude (e.g., RLF parameter per height (or altitude)).

[Table 10]

| Altitude | RLF parameter configuration |
|---|---|
| 0~300m | RLF parameter configuration "1" |
| 300~600m | RLF parameter configuration "2" |
| 600~1500m | RLF parameter configuration "3" |
| 1500~3000m | RLF parameter configuration "4" |

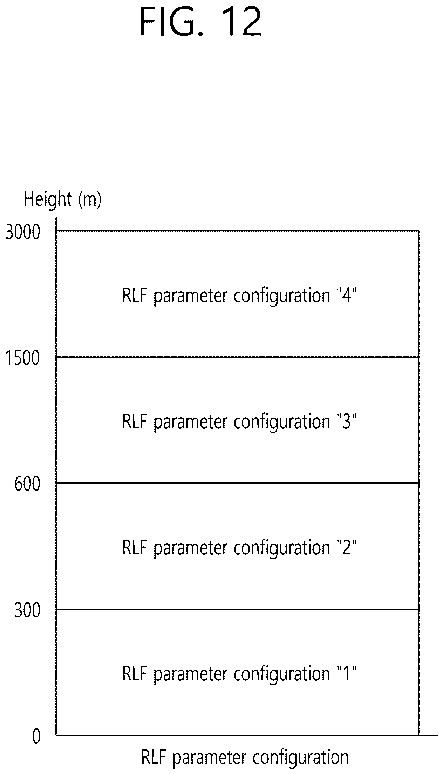

FIG. 12 shows an example of an RLF parameter configured per altitude, based on an embodiment of the present disclosure. The embodiment of FIG. 12 may be combined with various embodiments of the present disclosure.

Referring to FIG. 12, For example, different RLF parameters may be configured per altitude. For example, an altitude of 0-300 m may correspond to RLF parameter configuration "1." For example, an altitude of 300-600 m may correspond to RLF parameter configuration "2." For example, an altitude of 600-1500 m may correspond to RLF parameter configuration "3." For example, an altitude of 1500-3000 m may correspond to RLF parameter configuration "4."

For example, according to an embodiment of the present disclosure, a UAV UE may perform an RLM (radio link monitoring) operation and/or an RLF (radio link failure) operation by applying an RLF parameter configured per altitude. For example, a UAV UE may perform counting operations of Out of Sync (OOC) and In Sync (IC) per altitude and may independently perform an RLF declaration per altitude. For example, even if OOC counting and IC counting are performed per altitude independently, when OOC counting reaches a threshold at all altitudes and RLF recovery fails at all altitudes, an RLF may be declared. For example, OOC counting and IC counting performed per altitude may be reset (e.g., set to zero value).

For example, according to an embodiment of the present disclosure, an RLF parameter configuration for an RLF operation of an unmanned aerial vehicle (UAV) type UE may be as follows.

For example, RLF-TimersAndConstants may include the following.

- t310: t310 may be one of ms0, ms50, ms100, ms200, ms500, ms1000, ms2000, ms4000, or ms6000.
- n310: n310 may be one of n1, n2, n3, n4, n6, n8, n10, or n20.
- t311: t311 may be one of ms1000, ms3000, ms5000, ms10000, ms15000, ms20000, or ms30000.

For example, a constant related to RLF may include the following.

- N310: N310 may be for usage related to maximum number of consecutive "out-of-sync" indications for the SpCell received from lower layers.
- N311: N311 may be for usage related to maximum number of consecutive "in-sync" indications for the SpCell received from lower layers.

For example, a counter related to RLF may include the following.

- N310

  1. Reset: N310 may be reset upon reception of "in-sync" indication from lower layers. N310 may be reset upon receiving RRCReconfiguration with reconfigurationWithSync for that cell group. N310 may be reset upon initiating the connection re-establishment procedure.
  2. Incremented: N310 may be incremented upon reception of "out-of-sync" from lower layer while the timer T310 is stopped. N310 may be incremented.
  3. When reaching max value: T310 may be started.

- N311

  1. Reset: N311 may be reset upon reception of "out-of-sync" indication from lower layers. N311 may be reset upon receiving RRCReconfiguration with reconfigurationWithSync for that cell group. N311 may be reset upon initiating the connection re-establishment procedure.
  2. Incremented: N311 may be incremented upon reception of the "in-sync" from lower layer while the timer T310 is running.
  3. When reaching max value: T310 may be stopped.

For example, a timer related to RLF may include the following.

- T310

  1. Start: T310 may be started upon detecting physical layer problems for the SpCell. For example, T310 may be started upon receiving N310 consecutive out-of-sync indications from lower layers.
  2. Stop: T310 may be stopped upon receiving N311 consecutive in-sync indications from lower layers for the SpCell. T310 may be stopped upon receiving RRCReconfiguration with reconfiguration With Sync for that cell group. T310 may be stopped upon reception of MobilityFromNRCommand. T310 may be stopped upon reception of rlf-TimersAndConstant. T310 may be stopped upon the reconfiguration of rlf-TimersAndConstant. T310 may be stopped upon initiating the connection re-establishment procedure. T310 may be stopped upon conditional reconfiguration execution. For example, T310 may be stopped when applying a stored RRCReconfiguration message including reconfigurationWithSync for that cell group. T310 may be stopped upon initiating the MCG failure information procedure. T310 may be stopped upon SCG release, if the T310 is kept in SCG.
  3. At expiry: If the T310 is kept in MCG: If AS security is not activated: may go to RRC_IDLE. If the T310 is kept in MCG: If AS security is activated: may initiate the MCG failure information procedure as specified in 5.7.3b or the connection re-establishment procedure or the procedure as specified in 3GPP TS 38.331 5.3.10.3 if any DAPS bearer is configured. If the T310 is kept in SCG, may inform E-UTRAN/NR about the SCG radio link failure by initiating the SCG failure information procedure.

- T311

  1. Start: T311 may be started upon initiating the RRC connection re-establishment procedure.
  2. Stop: T311 may be stopped upon selection of a suitable NR cell, or upon selection of a suitable L2 U2N Relay UE, or a cell using another RAT.
  3. At expiry: T311 may be expired upon entering RRC_IDLE

By configuring T310 and N310 based on altitude, network performance may be optimized. For example, at higher altitudes where channel conditions are better, shorter T310 and lower N310 values may be configured. This may allow a network to detect and respond to out-of-sync events more quickly, improving overall network performance and reducing delay. For example, at lower altitudes where channel conditions may be worse, longer T310 and higher N310 values may be configured. This may help reduce unnecessary handovers and connection resets caused by temporary signal degradation. Configuring T310 and N310 based on altitude may improve network performance, improve user experience, optimize resource utilization, increase network stability, and promote adaptive network operation. Such altitude-based configuration may contribute to building a more responsive and resilient network capable of maintaining high performance under various conditions.

For example, according to an embodiment of the present disclosure, sidelink RLF parameters for sidelink communication may also be configured to have different values per altitude by a base station or may be pre-configured in advance. For example, SL RLF parameters that may be configured to have different values per altitude may be as follows.

SL RLF parameter configuration (e.g., sl-MaxNumConsecutiveDTX)

- This field may indicate a maximum number of consecutive HARQ DTX before triggering sidelink RLF. A value n1 may correspond to 1, a value n2 may correspond to 2, and so on.

For example, according to an embodiment of the present disclosure, there may be an embodiment in which different sidelink RLF parameters are configured per altitude. For example, Table 11 may be an example of a sidelink RLF parameter per altitude (e.g., sidelink RLF parameter per height (or altitude)).

[Table 11]

| Altitude | Sidelink RLF parameter configuration |
|---|---|
| 0~300m | Sidelink RLF parameter configuration "1" |
| 300~600m | Sidelink RLF parameter configuration "2" |
| 600~1500m | Sidelink RLF parameter configuration "3" |
| 1500~3000m | Sidelink RLF parameter configuration "4" |

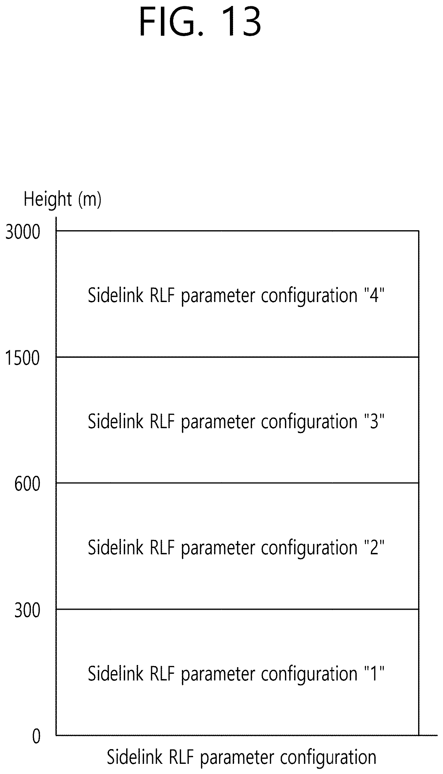

FIG. 13 shows an example of an RLF parameter configured per altitude, based on an embodiment of the present disclosure. The embodiment of FIG. 13 may be combined with various embodiments of the present disclosure.

Referring to FIG. 13, For example, different sidelink RLF parameters may be configured per altitude. For example, an altitude of 0-300 m may correspond to sidelink RLF parameter configuration "1." For example, an altitude of 300-600 m may correspond to sidelink RLF parameter configuration "2." For example, an altitude of 600-1500 m may correspond to sidelink RLF parameter configuration "3." For example, an altitude of 1500-3000 m may correspond to sidelink RLF parameter configuration "4."

For example, according to an embodiment of the present disclosure, a UAV UE may perform an radio link monitoring (RLM) operation and/or an radio link failure (RLF) operation by applying an SL RLF parameter configuration (e.g., sl-MaxNumConsecutiveDTX) defined per altitude. For example, a UAV UE may perform DTX counting per altitude independently and, even if DTX counting is performed per altitude independently, when DTX counting reaches sl-MaxNumConsecutiveDTX at all altitudes, a sidelink RLF may be declared. For example, DTX counting performed per altitude may be reset (e.g., set to zero value).

For example, according to an embodiment of the present disclosure, Uu RLF parameters per altitude of a UAV UE and SL RLF parameters per altitude of the UAV UE may be defined.

For example, according to an embodiment of the present disclosure, an operation of a UE and a base station may be proposed in which different RLF parameter configurations and SL RLF parameter configurations are defined per moving path (e.g., moving path 1, moving path 2, moving path 3, etc.) of a UAV UE. For example, because a moving path of a UAV UE may be predefined per UE in advance, an amount of transmitting and receiving traffic may differ per path. For example, in the present disclosure, different Uu RLF parameter configurations and SL RLF parameter configurations per moving path (e.g., moving path 1, moving path 2, moving path 3, etc.) of a UAV UE may be defined so that a UAV UE moving along different moving paths may apply different Uu RLF parameter configurations and/or SL RLF parameter configurations and may perform an radio link monitoring (RLM) operation and/or an radio link failure (RLF) operation.

For example, according to an embodiment of the present disclosure, when a UAV UE declares Uu RLF or SL RLF, the UAV UE may report altitude information at which the RLF has been declared and/or location information and/or moving path information to a base station.

For example, according to an embodiment of the present disclosure, names of RLF parameters (e.g., N310, N311, T310, T311) exemplified in the present disclosure are merely examples and may be interpreted as being replaced with other names.

The Uu DRX configuration mentioned in the present disclosure may include at least one of the following parameters.

- drx-onDurationTimer: the duration at the beginning of a DRX cycle;

- drx-SlotOffset: the delay before starting the drx-onDurationTimer;
- drx-InactivityTimer: the duration after the PDCCH occasion in which a PDCCH indicates a new UL, DL or SL transmission for the MAC entity;
- drx-RetransmissionTimerDL (per DL HARQ process except for the broadcast process): the maximum duration until a DL retransmission is received;
- drx-RetransmissionTimerUL (per UL HARQ process): the maximum duration until a grant for UL retransmission is received;
- drx-LongCycleStartOffset: the Long DRX cycle and drx-StartOffset which defines the subframe where the Long and Short DRX cycle starts;
- drx-ShortCycle (optional): the Short DRX cycle;
- drx-ShortCycleTimer (optional): the duration the UE shall follow the Short DRX cycle;
- drx-HARQ-RTT-TimerDL (per DL HARQ process except for the broadcast process): the minimum duration before a DL assignment for HARQ retransmission is expected by the MAC entity;
- drx-HARQ-RTT-TimerUL (per UL HARQ process): the minimum duration before a UL HARQ retransmission grant is expected by the MAC entity;
- drx-RetransmissionTimerSL (per SL HARQ process): the maximum duration until a grant for SL retransmission is received;
- drx-HARQ-RTT-TimerSL (per SL HARQ process): the minimum duration before an SL retransmission grant is expected by the MAC entity;
- drx-LastTransmissionUL (optional): the configuration to start drx-HARQ-RTT-TimerUL after the last transmission within a bundle;
- ps-Wakeup (optional): the configuration to start associated drx-onDurationTimer in case DCP is monitored but not detected;
- ps-TransmitOtherPeriodicCSI (optional): the configuration to report periodic CSI that is not L1-RSRP on PUCCH during the time duration indicated by drx-onDurationTimer in case DCP is configured but associated drx-onDurationTimer is not started;
- ps-TransmitPeriodicL1-RSRP (optional): the configuration to transmit periodic CSI that is L1-RSRP on PUCCH during the time duration indicated by drx-onDurationTimer in case DCP is configured but associated drx-onDurationTimer is not started;
- downlinkHARQ-FeedbackDisabled (optional): the configuration to disable HARQ feedback per DL HARQ process;
- uplinkHARQ-Mode (optional): the configuration to set HARQmodeA or HARQmodeB per UL HARQ process.

The following Uu DRX timer mentioned in the present disclosure may be used for the following purpose.

- drx-HARQ-RTT-TimerSL timer: a duration in which a Tx UE (e.g., a UE that supports Uu DRX operation) that performs sidelink communication based on sidelink resource allocation mode 1 does not perform PDCCH (e.g., or DCI) monitoring for sidelink mode 1 resource allocation from a base station
- drx-RetransmissionTimerSL timer: a duration in which a Tx UE (e.g., a UE that supports Uu DRX operation) that performs sidelink communication based on sidelink resource allocation mode 1 performs PDCCH (e.g., or DCI) monitoring for sidelink mode 1 resource allocation from a base station

In the present disclosure, the following (sidelink) DRX timers may be used for the following purposes.

- (sidelink) DRX onDuration timer: a duration in which a UE performing a (sidelink) DRX operation is to basically operate as an active time for receiving a PSCCH/PSSCH of a peer UE.
- (sidelink) DRX inactivity timer: a duration that extends the (sidelink) DRX onDuration duration, which is a duration in which a UE performing a (sidelink) DRX operation is to basically operate as an active time for receiving a PSCCH/PSSCH of a peer UE. For example, the (sidelink) DRX onDuration timer may be extended by the (sidelink) DRX inactivity timer duration. For example, when the UE receives a new packet (a new PSSCH transmission), the UE may start the (sidelink) DRX inactivity timer to extend the (sidelink) DRX onDuration timer.
- (sidelink) DRX HARQ RTT timer: a duration in which a UE performing a (sidelink) DRX operation operates in a sleep mode until receiving a retransmission packet transmitted by a peer UE (e.g., or a PSSCH allocation). For example, when the UE starts the (sidelink) DRX HARQ RTT timer, the UE may determine that the peer UE will not transmit a (sidelink) retransmission packet to the UE until the (sidelink) DRX HARQ RTT timer expires and may operate in the sleep mode during the timer.
- (sidelink) DRX retransmission timer: a duration in which a UE performing a (sidelink) DRX operation operates as an active time to receive a retransmission packet transmitted by a peer UE (e.g., or a PSSCH allocation). During the timer duration, the UE may monitor reception of a retransmission (sidelink) packet (e.g., or a PSSCH allocation) transmitted by the peer UE.

In the present disclosure, a (sidelink) DRX configuration may include at least one parameter among the following.

- SL drx-onDurationTimer: the duration at the beginning of a SL DRX Cycle;
- SL drx-SlotOffset: the delay before starting the sl drx-onDurationTimer;
- SL drx-InactivityTimer: the duration after the PSCCH occasion in which a PSCCH indicates a new SL transmission for the MAC entity;
- SL drx-StartOffset: the subframe where the SL DRX cycle start;
- SL drx-Cycle: the SL DRX cycle;
- SL drx-HARQ-RTT-Timer (per HARQ process or per sidelink process): the minimum duration before an assignment for HARQ retransmission is expected by the MAC entity.
- SL drx-RetransmissionTimer (per HARQ process or per sidelink process): the maximum duration until a retransmission is received

In the present disclosure, the following (sidelink) DRX timers may be used for the following purposes.

- (sidelink) DRX onDuration timer: a duration in which a UE performing a (sidelink) DRX operation is to basically operate as an active time for receiving a PSCCH/PSSCH of a peer UE.
- (sidelink) DRX inactivity timer: a duration that extends the (sidelink) DRX onDuration duration, which is a duration in which a UE performing a (sidelink) DRX operation is to basically operate as an active time for receiving a PSCCH/PSSCH of a peer UE. For example, the (sidelink) DRX onDuration timer may be extended by the (sidelink) DRX inactivity timer duration. For example, when the UE receives a new packet (a new PSSCH transmission), the UE may start the (sidelink) DRX inactivity timer to extend the (sidelink) DRX onDuration timer.
- (sidelink) DRX HARQ RTT timer: a duration in which a UE performing a (sidelink) DRX operation operates in a sleep mode until receiving a retransmission packet transmitted by a peer UE (e.g., or a PSSCH allocation). For example, when the UE starts the (sidelink) DRX HARQ RTT timer, the UE may determine that the peer UE will not transmit a (sidelink) retransmission packet to the UE until the (sidelink) DRX HARQ RTT timer expires and may operate in the sleep mode during the timer.
- (sidelink) DRX retransmission timer: a duration in which a UE performing a (sidelink) DRX operation operates as an active time to receive a retransmission packet transmitted by a peer UE (e.g., or a PSSCH allocation). During the timer duration, the UE may monitor reception of a retransmission (sidelink) packet (e.g., or a PSSCH allocation) transmitted by the peer UE.

For example, names of timers (e.g., a (sidelink) DRX onduration timer, a (sidelink) DRX inactivity timer, a (sidelink) DRX HARQ RTT timer, a (sidelink) DRX retransmission timer, and so on) are exemplary, and timers that perform the same/similar function based on descriptions of the respective timers may be regarded as the same/similar timers regardless of the names thereof.

In an embodiment of the present disclosure, "channel" may be applied by replacing "carrier" or "resource block set of a specific carrier" or "band".

For example, the present disclosure (e.g., whether or not (some of) the proposed method/rule of the present disclosure is applied and/or related parameter(s) (e.g., threshold value(s))) may be configured (differently or independently) for each SL-Channel Access Priority Class (CAPC). For example, the present disclosure (e.g., whether or not (some of) the proposed method/rule of the present disclosure is applied and/or related parameter(s) (e.g., threshold value(s))) may be configured (differently or independently) for each SL-LBT type (e.g., Type 1 LBT, Type 2A LBT, Type 2B LBT, Type 2C LBT). For example, the present disclosure (e.g., whether or not (some of) the proposed method/rule of the present disclosure is applied and/or related parameter(s) (e.g., threshold value(s))) may be configured specifically (or differently or independently) depending on whether or not Frame Based LBT is applied. For example, the present disclosure (e.g., whether or not (some of) the proposed method/rule of the present disclosure is applied and/or related parameter(s) (e.g., threshold value(s))) may be configured specifically (or differently or independently) depending on whether or not Load Based LBT is applied.

For example, the present disclosure (e.g., whether or not (some of) the proposed method/rule of the present disclosure is applied and/or related parameter(s) (e.g., threshold value(s))) may be configured (differently or independently) for each resource pool. For example, the present disclosure (e.g., whether or not (some of) the proposed method/rule of the present disclosure is applied and/or related parameter(s) (e.g., threshold value(s))) may be configured (differently or independently) for each congestion level. For example, the present disclosure (e.g., whether or not (some of) the proposed method/rule of the present disclosure is applied and/or related parameter(s) (e.g., threshold value(s))) may be configured (differently or independently) for each service priority. For example, the present disclosure (e.g., whether or not (some of) the proposed method/rule of the present disclosure is applied and/or related parameter(s) (e.g., threshold value(s))) may be configured (differently or independently) for each service type. For example, the present disclosure (e.g., whether or not (some of) the proposed method/rule of the present disclosure is applied and/or related parameter(s) (e.g., threshold value(s))) may be configured (differently or independently) for each QoS requirement (e.g., latency, reliability). For example, the present disclosure (e.g., whether or not (some of) the proposed method/rule of the present disclosure is applied and/or related parameter(s) (e.g., threshold value(s))) may be configured (differently or independently) for each PQI (5G QoS identifier (5QI) for PC5). For example, the present disclosure (e.g., whether or not (some of) the proposed method/rule of the present disclosure is applied and/or related parameter(s) (e.g., threshold value(s))) may be configured (differently or independently) for each traffic type (e.g., periodic generation or aperiodic generation). For example, the present disclosure (e.g., whether or not (some of) the proposed method/rule of the present disclosure is applied and/or related parameter(s) (e.g., threshold value(s))) may be configured (differently or independently) for each SL transmission resource allocation mode (e.g., mode 1 or mode 2). For example, the present disclosure (e.g., whether or not (some of) the proposed method/rule of the present disclosure is applied and/or related parameter(s) (e.g., threshold value(s))) may be configured (differently or independently) for each Tx profile (e.g., a Tx profile indicating that a service supports sidelink DRX operation or a Tx profile indicating that a service does not need to support sidelink DRX operation).

For example, the present disclosure (e.g., whether or not the proposed rule is applied (and/or a related parameter configured value)) may be specifically (and/or independently and/or differently) configured for at least one of: whether to support PUCCH configuration (e.g., in a case where a PUCCH resource is configured or in a case where a PUCCH resource is not configured), a resource pool (e.g., a resource pool where a PSFCH is configured, or a resource pool where a PSFCH is not configured), service/packet type (and/or priority), a QoS profile or QoS requirement (e.g., URLLC/eMBB traffic, reliability, latency), PQI, PFI, cast type (e.g., unicast, groupcast, broadcast), a congestion level of a resource pool (e.g., CBR), SL HARQ feedback scheme (e.g., NACK-only feedback, ACK/NACK feedback), a case of transmitting a HARQ feedback enabled MAC PDU (and/or a HARQ feedback disabled MAC PDU), whether to configure a PUCCH-based SL HARQ feedback reporting operation, a case of (non-)performing pre-emption (and/or re-evaluation) (or resource reselection based thereon), (L2 or L1) identifiers (source and/or destination), (L2 or L1) identifiers of a combination of source layer ID and destination layer ID, identifiers of a combination of a pair of source layer ID and destination layer ID and a cast type, a direction of a pair of source layer ID and destination layer ID, PC5 RRC connection/link, a case of (non-)performing (or supporting) SL DRX, an SL mode type (resource allocation mode 1, resource allocation mode 2), (non-)performing periodic resource reservation, and a Tx profile (e.g., a Tx profile indicating that the service supports sidelink DRX operation, or a Tx profile indicating that the service does not need to support sidelink DRX operation).

For example, the present disclosure (e.g., whether or not the proposed rule is applied (and/or a related parameter configured value)) may be specifically (and/or independently and/or differently) configured for whether to support PUCCH configuration (e.g., in a case where a PUCCH resource is configured or in a case where a PUCCH resource is not configured). For example, the present disclosure (e.g., whether or not the proposed rule is applied (and/or a related parameter configured value)) may be specifically (and/or independently and/or differently) configured for a resource pool (e.g., a resource pool where a PSFCH is configured or a resource pool where a PSFCH is not configured). For example, the present disclosure (e.g., whether or not the proposed rule is applied (and/or a related parameter configured value)) may be specifically (and/or independently and/or differently) configured for a service/packet type (and/or priority). For example, the present disclosure (e.g., whether or not the proposed rule is applied (and/or a related parameter configured value)) may be specifically (and/or independently and/or differently) configured for a QoS profile or QoS requirement (e.g., URLLC/eMBB traffic, reliability, latency). For example, the present disclosure (e.g., whether or not the proposed rule is applied (and/or a related parameter configured value)) may be specifically (and/or independently and/or differently) configured for PQI. For example, the present disclosure (e.g., whether or not the proposed rule is applied (and/or a related parameter configured value)) may be specifically (and/or independently and/or differently) configured for PFI. For example, the present disclosure (e.g., whether or not the proposed rule is applied (and/or a related parameter configured value)) may be specifically (and/or independently and/or differently) configured for a cast type. For example, the present disclosure (e.g., whether or not the proposed rule is applied (and/or a related parameter configured value)) may be specifically (and/or independently and/or differently) configured for unicast. For example, the present disclosure (e.g., whether or not the proposed rule is applied (and/or a related parameter configured value)) may be specifically (and/or independently and/or differently) configured for groupcast. For example, the present disclosure (e.g., whether or not the proposed rule is applied (and/or a related parameter configured value)) may be specifically (and/or independently and/or differently) configured for broadcast. For example, the present disclosure (e.g., whether or not the proposed rule is applied (and/or a related parameter configured value)) may be specifically (and/or independently and/or differently) configured for a congestion level of a resource pool (e.g., CBR). For example, the present disclosure (e.g., whether or not the proposed rule is applied (and/or a related parameter configured value)) may be specifically (and/or independently and/or differently) configured for an SL HARQ feedback scheme (e.g., NACK-only feedback, ACK/NACK feedback). For example, the present disclosure (e.g., whether or not the proposed rule is applied (and/or a related parameter configured value)) may be specifically (and/or independently and/or differently) configured for a case of transmitting a HARQ feedback enabled MAC PDU (and/or a HARQ feedback disabled MAC PDU). For example, the present disclosure (e.g., whether or not the proposed rule is applied (and/or a related parameter configured value)) may be specifically (and/or independently and/or differently) configured for whether to configure a PUCCH-based SL HARQ feedback reporting operation. For example, the present disclosure (e.g., whether or not the proposed rule is applied (and/or a related parameter configured value)) may be specifically (and/or independently and/or differently) configured for a case of (non-)performing pre-emption (and/or re-evaluation) (or resource reselection based thereon). For example, the present disclosure (e.g., whether or not the proposed rule is applied (and/or a related parameter configured value)) may be specifically (and/or independently and/or differently) configured for (L2 or L1) identifiers (source and/or destination). For example, the present disclosure (e.g., whether or not the proposed rule is applied (and/or a related parameter configured value)) may be specifically (and/or independently and/or differently) configured for (L2 or L1) identifiers of a combination of a source layer ID and a destination layer ID. For example, the present disclosure (e.g., whether or not the proposed rule is applied (and/or a related parameter configured value)) may be specifically (and/or independently and/or differently) configured for identifiers of a combination of a pair of source layer ID and destination layer ID and a cast type. For example, the present disclosure (e.g., whether or not the proposed rule is applied (and/or a related parameter configured value)) may be specifically (and/or independently and/or differently) configured for a direction of a pair of source layer ID and destination layer ID. For example, the present disclosure (e.g., whether or not the proposed rule is applied (and/or a related parameter configured value)) may be specifically (and/or independently and/or differently) configured for a PC5 RRC connection/link. For example, the present disclosure (e.g., whether or not the proposed rule is applied (and/or a related parameter configured value)) may be specifically (and/or independently and/or differently) configured for a case of (non-)performing (or supporting) SL DRX. For example, the present disclosure (e.g., whether or not the proposed rule is applied (and/or a related parameter configured value)) may be specifically (and/or independently and/or differently) configured for an SL mode type (resource allocation mode 1, resource allocation mode 2). For example, the present disclosure (e.g., whether or not the proposed rule is applied (and/or a related parameter configured value)) may be specifically (and/or independently and/or differently) configured for (non-)performing periodic resource reservation. For example, the present disclosure (e.g., whether or not the proposed rule is applied (and/or a related parameter configured value)) may be specifically (and/or independently and/or differently) configured for a Tx profile (e.g., a Tx profile indicating that the service supports sidelink DRX operation or a Tx profile indicating that the service does not need to support sidelink DRX operation).

The proposal and whether or not the proposal rule of the present disclosure is applied (and/or related parameter configuration value(s)) may also be applied to a mmWave (SL) operation.

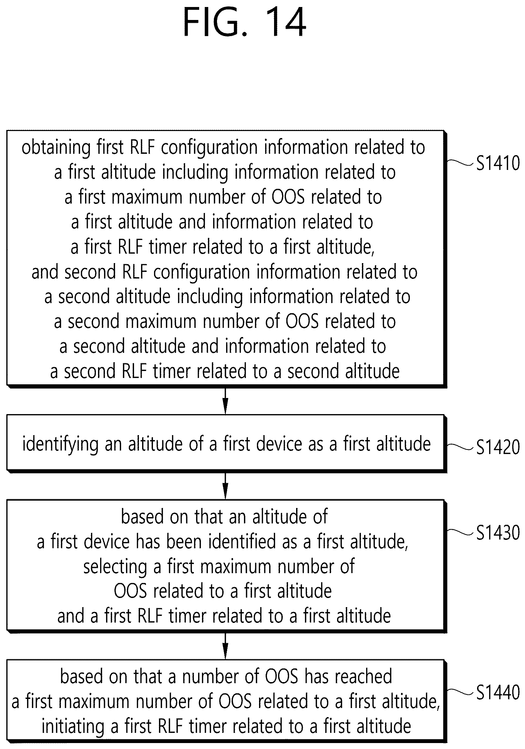

FIG. 14 shows a method for a first device to perform wireless communication, based on an embodiment of the present disclosure. The embodiment of FIG. 14 may be combined with various embodiments of the present disclosure.

Referring to FIG. 14, in step S1410, the first device may obtain first radio link failure (RLF) configuration information related to a first altitude including information related to a first maximum number of out-of-sync (OOS) related to the first altitude and information related to a first RLF timer related to the first altitude, and second RLF configuration information related to a second altitude including information related to a second maximum number of OOS related to the second altitude and information related to a second RLF timer related to the second altitude. In step S1420, the first device may identify an altitude of the first device as the first altitude. In step S1430, the first device may, based on that the altitude of the first device has been identified as the first altitude, select the first maximum number of OOS related to the first altitude and the first RLF timer related to the first altitude. In step S 1440, the first device may, based on that a number of OOS has reached the first maximum number of OOS related to the first altitude, initiate the first RLF timer related to the first altitude. For example, the number of OOS may be incremented based on that information related to OOS has been obtained from a lower layer of the first device.

For example, the information related to the first maximum number of OOS related to the first altitude may be configured independently of the information related to the second maximum number of OOS related to the second altitude. For example, the information related to the first RLF timer related to the first altitude may be configured independently of the information related to the second RLF timer related to the second altitude. For example, the first RLF configuration information related to the first altitude may be configured independently of the second RLF configuration information related to the second altitude.

For example, based on that the first altitude is lower than the second altitude, the first maximum number of OOS related to the first altitude may be configured to be greater than the second maximum number of OOS related to the second altitude.

For example, based on that the first altitude is lower than the second altitude, the first RLF timer related to the first altitude may be configured to be greater than the second RLF timer related to the second altitude.

For example, based on that the first altitude is lower than the second altitude, the first maximum number of OOS related to the first altitude may be configured to be smaller than the second maximum number of OOS related to the second altitude.

For example, based on that the first altitude is lower than the second altitude, the first RLF timer related to the first altitude is configured to be smaller than the second RLF timer related to the second altitude.

For example, the first maximum number of OOS related to the first altitude may be related to information related to consecutive OOS.

For example, the first RLF configuration information related to the first altitude may include information related to a first maximum number of in-sync (IS) related to the first altitude. For example, the second RLF configuration information related to the second altitude may include information related to a second maximum number of IS related to the second altitude. For example, the first RLF timer related to the first altitude may be stopped based on that the first RLF timer related to the first altitude is running and a number of IS has reached the first maximum number of IS related to the first altitude.

For example, the information related to the first maximum number of OOS related to the first altitude may be configured independently of the information related to the second maximum number of OOS related to the second altitude. For example, the information related to the first RLF timer related to the first altitude may be configured independently of the information related to the second RLF timer related to the second altitude. For example, the information related to the first maximum number of IS related to the first altitude may be configured independently of the information related to the second maximum number of IS related to the second altitude. For example, the first RLF configuration information related to the first altitude may be configured independently of the second RLF configuration information related to the second altitude.

For example, based on that the first altitude is lower than the second altitude, the first maximum number of IS related to the first altitude may be configured to be smaller than the second maximum number of IS related to the second altitude.

For example, based on that the first altitude is lower than the second altitude, the first maximum number of IS related to the first altitude may be configured to be greater than the second maximum number of IS related to the second altitude.

For example, the first maximum number of IS related to the first altitude may be related to information related to consecutive IS.

For example, the number of OOS may be a number of OOS related to the first altitude based on that the altitude of the first device has been identified as the first altitude. For example, the first RLF timer related to the first altitude may be initiated based on that the number of OOS related to the first altitude has reached the first maximum number of OOS related to the first altitude. For example, the number of OOS related to the first altitude may be incremented based on that information related to OOS has been obtained from a lower layer of the first device at the first altitude.

For example, an RLF may be detected for the first altitude based on that the first RLF timer related to the first altitude has expired.

For example, an RLF may be detected based on that the first RLF timer related to the first altitude and the second RLF timer related to the second altitude have expired.

For example, the RLF may be detected based on that both the first RLF timer related to the first altitude and the second RLF timer related to the second altitude have expired.

The proposed method can be applied to the device, based on various embodiments of the present disclosure. First, the processor 102 of the first device 100 may obtain first radio link failure (RLF) configuration information related to a first altitude including information related to a first maximum number of out-of-sync (OOS) related to the first altitude and information related to a first RLF timer related to the first altitude, and second RLF configuration information related to a second altitude including information related to a second maximum number of OOS related to the second altitude and information related to a second RLF timer related to the second altitude. In addition, the processor 102 of the first device 100 may identify an altitude of the first device as the first altitude. In addition, the processor 102 of the first device 100 may, based on that the altitude of the first device has been identified as the first altitude, select the first maximum number of OOS related to the first altitude and the first RLF timer related to the first altitude. In addition, the processor 102 of the first device 100 may, based on that a number of OOS has reached the first maximum number of OOS related to the first altitude, initiate the first RLF timer related to the first altitude. For example, the number of OOS may be incremented based on that information related to OOS has been obtained from a lower layer of the first device.

Based on an embodiment of the present disclosure, a first device adapted to perform wireless communication may be provided. For example, the first device may include: at least one transceiver; at least one processor; and at least one memory connected to the at least one processor and storing instructions. For example, the instructions, based on being executed by the at least one processor, may cause the first device to perform operations comprising: obtaining first radio link failure (RLF) configuration information related to a first altitude including information related to a first maximum number of out-of-sync (OOS) related to the first altitude and information related to a first RLF timer related to the first altitude, and second RLF configuration information related to a second altitude including information related to a second maximum number of OOS related to the second altitude and information related to a second RLF timer related to the second altitude; identifying an altitude of the first device as the first altitude; based on that the altitude of the first device has been identified as the first altitude, selecting the first maximum number of OOS related to the first altitude and the first RLF timer related to the first altitude; and based on that a number of OOS has reached the first maximum number of OOS related to the first altitude, initiating the first RLF timer related to the first altitude. For example, the number of OOS may be incremented based on that information related to OOS has been obtained from a lower layer of the first device.

Based on an embodiment of the present disclosure, a processing device adapted to control a first device may be provided. The processing device may include: at least one processor; and at least one memory connected to the at least one processor and storing instructions. For example, the instructions, based on being executed by the at least one processor, may cause the first device to perform operations comprising: obtaining first radio link failure (RLF) configuration information related to a first altitude including information related to a first maximum number of out-of-sync (OOS) related to the first altitude and information related to a first RLF timer related to the first altitude, and second RLF configuration information related to a second altitude including information related to a second maximum number of OOS related to the second altitude and information related to a second RLF timer related to the second altitude; identifying an altitude of the first device as the first altitude; based on that the altitude of the first device has been identified as the first altitude, selecting the first maximum number of OOS related to the first altitude and the first RLF timer related to the first altitude; and based on that a number of OOS has reached the first maximum number of OOS related to the first altitude, initiating the first RLF timer related to the first altitude. For example, the number of OOS may be incremented based on that information related to OOS has been obtained from a lower layer of the first device.

Based on an embodiment of the present disclosure, a non-transitory computer-readable storage medium storing instructions may be provided. For example, the instructions, based on being executed, may cause a first device to perform operations comprising: obtaining first radio link failure (RLF) configuration information related to a first altitude including information related to a first maximum number of out-of-sync (OOS) related to the first altitude and information related to a first RLF timer related to the first altitude, and second RLF configuration information related to a second altitude including information related to a second maximum number of OOS related to the second altitude and information related to a second RLF timer related to the second altitude; identifying an altitude of the first device as the first altitude; based on that the altitude of the first device has been identified as the first altitude, selecting the first maximum number of OOS related to the first altitude and the first RLF timer related to the first altitude; and based on that a number of OOS has reached the first maximum number of OOS related to the first altitude, initiating the first RLF timer related to the first altitude. For example, the number of OOS may be incremented based on that information related to OOS has been obtained from a lower layer of the first device.

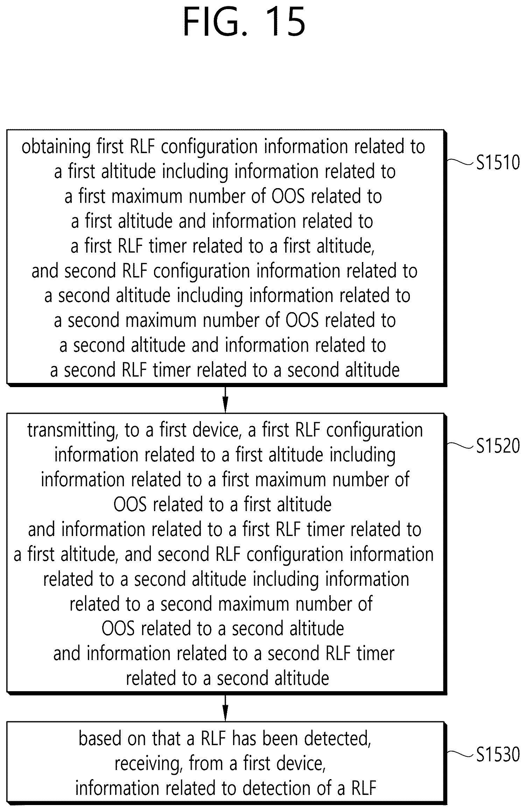

FIG. 15 shows a method for a base station to perform wireless communication, based on an embodiment of the present disclosure. The embodiment of FIG. 15 may be combined with various embodiments of the present disclosure.

Referring to FIG. 15, in step S1510, the base station may obtain first radio link failure (RLF) configuration information related to a first altitude including information related to a first maximum number of out-of-sync (OOS) related to the first altitude and information related to a first RLF timer related to the first altitude, and second RLF configuration information related to a second altitude including information related to a second maximum number of OOS related to the second altitude and information related to a second RLF timer related to the second altitude. In step S1520, the base station may transmit, to a first device, the first RLF configuration information related to the first altitude including information related to the first maximum number of OOS related to the first altitude and information related to the first RLF timer related to the first altitude, and the second RLF configuration information related to the second altitude including information related to the second maximum number of OOS related to the second altitude and information related to the second RLF timer related to the second altitude. In step S1530, the base station may, based on that an RLF has been detected, receive, from the first device, information related to detection of the RLF. For example, an altitude of the first device may be identified as the first altitude. For example, the first maximum number of OOS related to the first altitude and the first RLF timer related to the first altitude may be selected based on that the altitude of the first device has been identified as the first altitude. For example, the first RLF timer related to the first altitude may be initiated based on that a number of OOS has reached the first maximum number of OOS related to the first altitude. For example, the number of OOS may be incremented based on that information related to OOS has been obtained from a lower layer of the first device.

For example, the information related to the first maximum number of OOS related to the first altitude may be configured independently of the information related to the second maximum number of OOS related to the second altitude. For example, the information related to the first RLF timer related to the first altitude may be configured independently of the information related to the second RLF timer related to the second altitude. For example, the first RLF configuration information related to the first altitude may be configured independently of the second RLF configuration information related to the second altitude.

For example, based on that the first altitude is lower than the second altitude, the first maximum number of OOS related to the first altitude may be configured to be greater than the second maximum number of OOS related to the second altitude.

For example, based on that the first altitude is lower than the second altitude, the first RLF timer related to the first altitude may be configured to be greater than the second RLF timer related to the second altitude.

For example, based on that the first altitude is lower than the second altitude, the first maximum number of OOS related to the first altitude may be configured to be smaller than the second maximum number of OOS related to the second altitude.

For example, based on that the first altitude is lower than the second altitude, the first RLF timer related to the first altitude is configured to be smaller than the second RLF timer related to the second altitude.

For example, the first maximum number of OOS related to the first altitude may be related to information related to consecutive OOS.

For example, the first RLF configuration information related to the first altitude may include information related to a first maximum number of in-sync (IS) related to the first altitude. For example, the second RLF configuration information related to the second altitude may include information related to a second maximum number of IS related to the second altitude. For example, the first RLF timer related to the first altitude may be stopped based on that the first RLF timer related to the first altitude is running and a number of IS has reached the first maximum number of IS related to the first altitude.

For example, the information related to the first maximum number of OOS related to the first altitude may be configured independently of the information related to the second maximum number of OOS related to the second altitude. For example, the information related to the first RLF timer related to the first altitude may be configured independently of the information related to the second RLF timer related to the second altitude. For example, the information related to the first maximum number of IS related to the first altitude may be configured independently of the information related to the second maximum number of IS related to the second altitude. For example, the first RLF configuration information related to the first altitude may be configured independently of the second RLF configuration information related to the second altitude.

For example, based on that the first altitude is lower than the second altitude, the first maximum number of IS related to the first altitude may be configured to be smaller than the second maximum number of IS related to the second altitude.

For example, based on that the first altitude is lower than the second altitude, the first maximum number of IS related to the first altitude may be configured to be greater than the second maximum number of IS related to the second altitude.

For example, the first maximum number of IS related to the first altitude may be related to information related to consecutive IS.

For example, the number of OOS may be a number of OOS related to the first altitude based on that the altitude of the first device has been identified as the first altitude. For example, the first RLF timer related to the first altitude may be initiated based on that the number of OOS related to the first altitude has reached the first maximum number of OOS related to the first altitude. For example, the number of OOS related to the first altitude may be incremented based on that information related to OOS has been obtained from a lower layer of the first device at the first altitude.

For example, an RLF may be detected for the first altitude based on that the first RLF timer related to the first altitude has expired.

For example, an RLF may be detected based on that the first RLF timer related to the first altitude and the second RLF timer related to the second altitude have expired.

For example, the RLF may be detected based on that both the first RLF timer related to the first altitude and the second RLF timer related to the second altitude have expired.

The proposed method can be applied to the device, based on various embodiments of the present disclosure. First, the processor 202 of the base station 200 may obtain first radio link failure (RLF) configuration information related to a first altitude including information related to a first maximum number of out-of-sync (OOS) related to the first altitude and information related to a first RLF timer related to the first altitude, and second RLF configuration information related to a second altitude including information related to a second maximum number of OOS related to the second altitude and information related to a second RLF timer related to the second altitude. In addition, the processor 202 of the base station 200 may control the transceiver 206 to transmit, to a first device, the first RLF configuration information related to the first altitude including information related to the first maximum number of OOS related to the first altitude and information related to the first RLF timer related to the first altitude, and the second RLF configuration information related to the second altitude including information related to the second maximum number of OOS related to the second altitude and information related to the second RLF timer related to the second altitude. In addition, the processor 202 of the base station 200 may, based on that an RLF has been detected, control the transceiver 206 to receive, from the first device, information related to detection of the RLF. For example, an altitude of the first device may be identified as the first altitude. For example, the first maximum number of OOS related to the first altitude and the first RLF timer related to the first altitude may be selected based on that the altitude of the first device has been identified as the first altitude. For example, the first RLF timer related to the first altitude may be initiated based on that a number of OOS has reached the first maximum number of OOS related to the first altitude. For example, the number of OOS may be incremented based on that information related to OOS has been obtained from a lower layer of the first device.

Based on an embodiment of the present disclosure, a base station adapted to perform wireless communication may be provided. For example, the base station may include: at least one transceiver; at least one processor; and at least one memory connected to the at least one processor and storing instructions. For example, the instructions, based on being executed by the at least one processor, may cause the base station to perform operations comprising: obtaining first radio link failure (RLF) configuration information related to a first altitude including information related to a first maximum number of out-of-sync (OOS) related to the first altitude and information related to a first RLF timer related to the first altitude, and second RLF configuration information related to a second altitude including information related to a second maximum number of OOS related to the second altitude and information related to a second RLF timer related to the second altitude; transmitting, to a first device, the first RLF configuration information related to the first altitude including information related to the first maximum number of OOS related to the first altitude and information related to the first RLF timer related to the first altitude, and the second RLF configuration information related to the second altitude including information related to the second maximum number of OOS related to the second altitude and information related to the second RLF timer related to the second altitude; and based on that an RLF has been detected, receiving, from the first device, information related to detection of the RLF. For example, an altitude of the first device may be identified as the first altitude. For example, the first maximum number of OOS related to the first altitude and the first RLF timer related to the first altitude may be selected based on that the altitude of the first device has been identified as the first altitude. For example, the first RLF timer related to the first altitude may be initiated based on that a number of OOS has reached the first maximum number of OOS related to the first altitude. For example, the number of OOS may be incremented based on that information related to OOS has been obtained from a lower layer of the first device.

Based on an embodiment of the present disclosure, a processing device adapted to control a base station may be provided. The processing device may include: at least one processor; and at least one memory connected to the at least one processor and storing instructions. For example, the instructions, based on being executed by the at least one processor, may cause the base station to perform operations comprising: obtaining first radio link failure (RLF) configuration information related to a first altitude including information related to a first maximum number of out-of-sync (OOS) related to the first altitude and information related to a first RLF timer related to the first altitude, and second RLF configuration information related to a second altitude including information related to a second maximum number of OOS related to the second altitude and information related to a second RLF timer related to the second altitude; transmitting, to a first device, the first RLF configuration information related to the first altitude including information related to the first maximum number of OOS related to the first altitude and information related to the first RLF timer related to the first altitude, and the second RLF configuration information related to the second altitude including information related to the second maximum number of OOS related to the second altitude and information related to the second RLF timer related to the second altitude; and based on that an RLF has been detected, receiving, from the first device, information related to detection of the RLF. For example, an altitude of the first device may be identified as the first altitude. For example, the first maximum number of OOS related to the first altitude and the first RLF timer related to the first altitude may be selected based on that the altitude of the first device has been identified as the first altitude. For example, the first RLF timer related to the first altitude may be initiated based on that a number of OOS has reached the first maximum number of OOS related to the first altitude. For example, the number of OOS may be incremented based on that information related to OOS has been obtained from a lower layer of the first device.

Based on an embodiment of the present disclosure, a non-transitory computer-readable storage medium storing instructions may be provided. For example, the instructions, based on being executed, may cause a base station to perform operations comprising: obtaining first radio link failure (RLF) configuration information related to a first altitude including information related to a first maximum number of out-of-sync (OOS) related to the first altitude and information related to a first RLF timer related to the first altitude, and second RLF configuration information related to a second altitude including information related to a second maximum number of OOS related to the second altitude and information related to a second RLF timer related to the second altitude; transmitting, to a first device, the first RLF configuration information related to the first altitude including information related to the first maximum number of OOS related to the first altitude and information related to the first RLF timer related to the first altitude, and the second RLF configuration information related to the second altitude including information related to the second maximum number of OOS related to the second altitude and information related to the second RLF timer related to the second altitude; and based on that an RLF has been detected, receiving, from the first device, information related to detection of the RLF. For example, an altitude of the first device may be identified as the first altitude. For example, the first maximum number of OOS related to the first altitude and the first RLF timer related to the first altitude may be selected based on that the altitude of the first device has been identified as the first altitude. For example, the first RLF timer related to the first altitude may be initiated based on that a number of OOS has reached the first maximum number of OOS related to the first altitude. For example, the number of OOS may be incremented based on that information related to OOS has been obtained from a lower layer of the first device.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

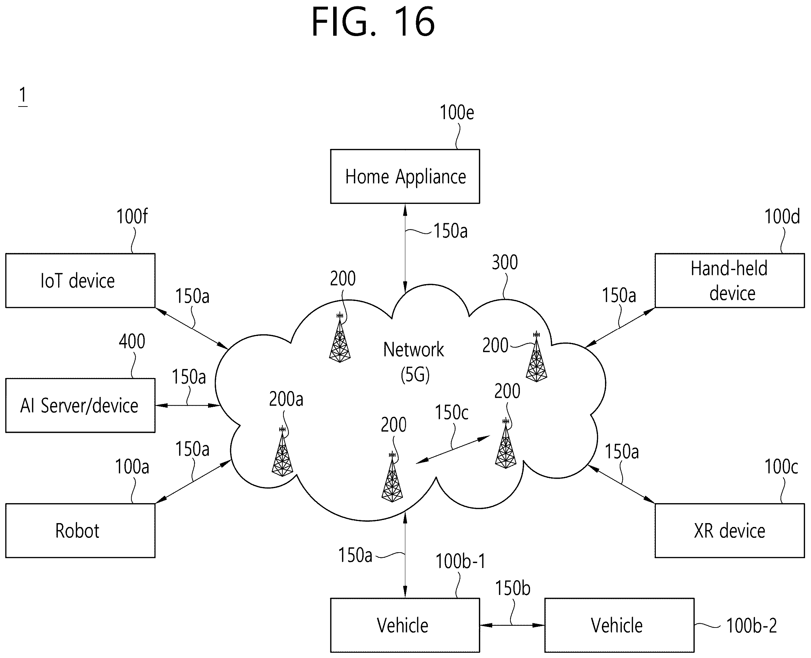

FIG. 16 shows a communication system 1, based on an embodiment of the present disclosure. The embodiment of FIG. 16 may be combined with various embodiments of the present disclosure.

Referring to FIG. 16, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or an Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

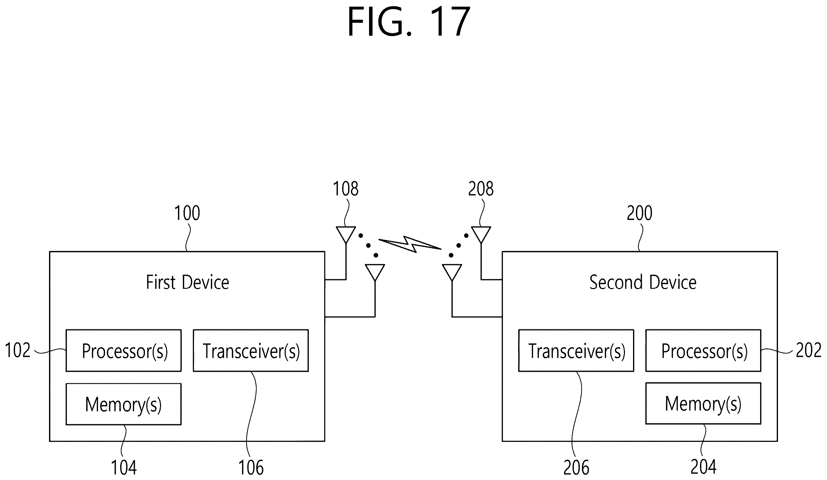

FIG. 17 shows wireless devices, based on an embodiment of the present disclosure. The embodiment of FIG. 17 may be combined with various embodiments of the present disclosure.

Referring to FIG. 17, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 16.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cache memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

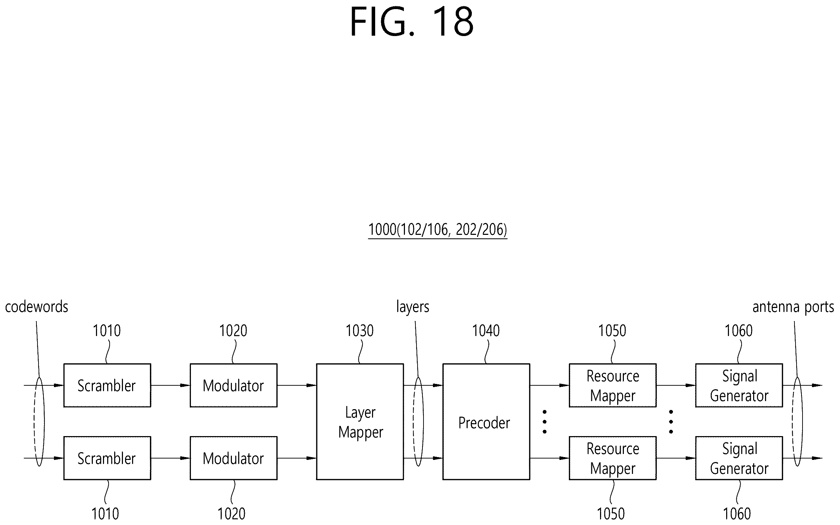

FIG. 18 shows a signal process circuit for a transmission signal, based on an embodiment of the present disclosure. The embodiment of FIG. 18 may be combined with various embodiments of the present disclosure.

Referring to FIG. 18, a signal processing circuit 1000 may include scramblers 1010, modulators 1020, a layer mapper 1030, a precoder 1040, resource mappers 1050, and signal generators 1060. An operation/function of FIG. 18 may be performed, without being limited to, the processors 102 and 202 and/or the transceivers 106 and 206 of FIG. 17. Hardware elements of FIG. 18 may be implemented by the processors 102 and 202 and/or the transceivers 106 and 206 of FIG. 17. For example, blocks 1010 to 1060 may be implemented by the processors 102 and 202 of FIG. 17. Alternatively, the blocks 1010 to 1050 may be implemented by the processors 102 and 202 of FIG. 17 and the block 1060 may be implemented by the transceivers 106 and 206 of FIG. 17.

Codewords may be converted into radio signals via the signal processing circuit 1000 of FIG. 18. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 18. For example, the wireless devices (e.g., 100 and 200 of FIG.

17) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

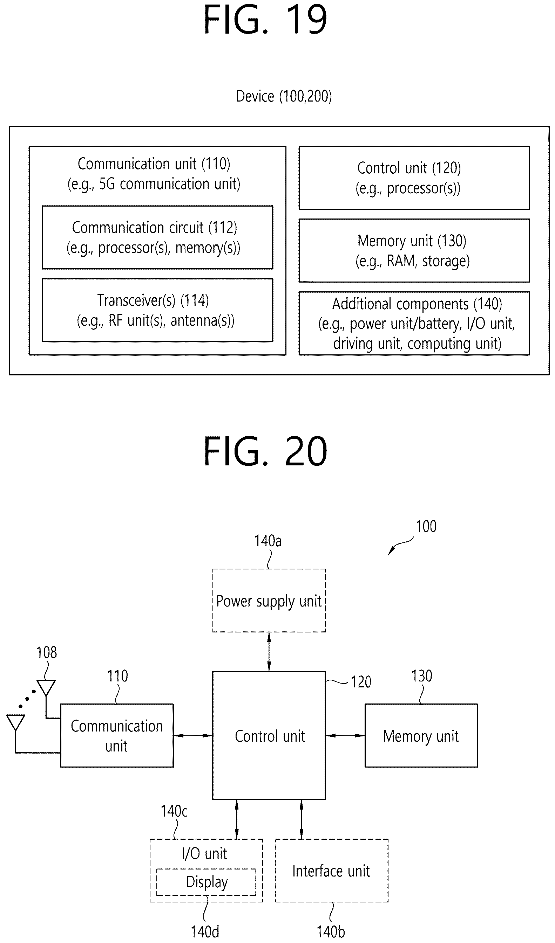

FIG. 19 shows another example of a wireless device, based on an embodiment of the present disclosure. The wireless device may be implemented in various forms according to a use-case/service (refer to FIG. 16). The embodiment of FIG. 19 may be combined with various embodiments of the present disclosure.

Referring to FIG. 19, wireless devices 100 and 200 may correspond to the wireless devices 100 and 200 of FIG. 17 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 17. For example, the transceiver(s) 114 may include the one or more transceivers 106 and 206 and/or the one or more antennas 108 and 208 of FIG. 17. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 16), the vehicles (100b-1 and 100b-2 of FIG. 16), the XR device (100c of FIG. 16), the hand-held device (100d of FIG. 16), the home appliance (100e of FIG. 16), the IoT device (100f of FIG. 16), a digital broadcast terminal, a hologram device, a public safety device, an MTC device, a medicine device, a fintech device (or a finance device), a security device, a climate/environment device, the AI server/device (400 of FIG. 16), the BSs (200 of FIG. 16), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 19 will be described in detail with reference to the drawings.

FIG. 20 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 20 may be combined with various embodiments of the present disclosure.

Referring to FIG. 20, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 19, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

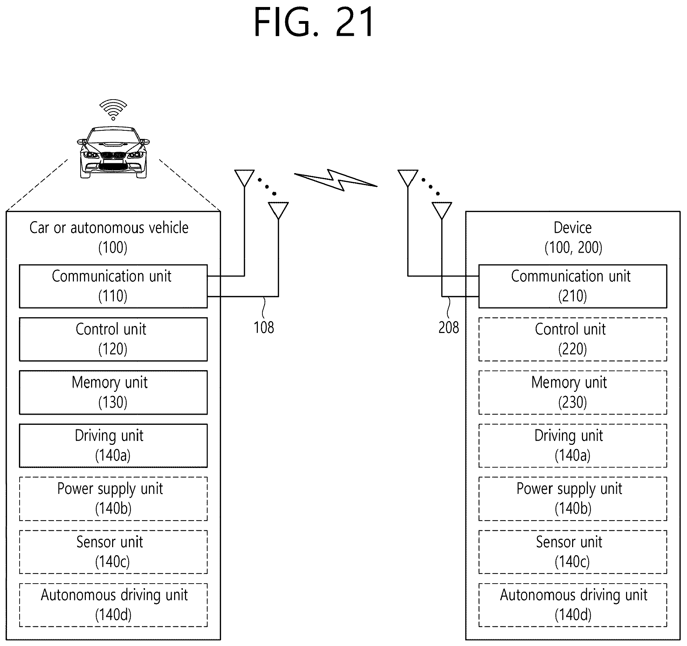

FIG. 21 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 21 may be combined with various embodiments of the present disclosure.

Referring to FIG. 21, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 19, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

**Claims**

**1.** A method performed by a first device in a wireless communication system, the method comprising:

obtaining first radio link failure (RLF) configuration information related to a first altitude including information related to a first maximum number of out-of-sync (OOS) related to the first altitude and information related to a first RLF timer related to the first altitude, and second RLF configuration information related to a second altitude including information related to a second maximum number of OOS related to the second altitude and information related to a second RLF timer related to the second altitude;

identifying an altitude of the first device as the first altitude;

based on that the altitude of the first device has been identified as the first altitude, selecting the first maximum number of OOS related to the first altitude and the first RLF timer related to the first altitude; and

based on that a number of OOS has reached the first maximum number of OOS related to the first altitude, initiating the first RLF timer related to the first altitude;

wherein the number of OOS is incremented based on that information related to OOS has been obtained from a lower layer of the first device.

2. The method of claim 1,

wherein the information related to the first maximum number of OOS related to the first altitude is configured independently of the information related to the second maximum number of OOS related to the second altitude,

wherein the information related to the first RLF timer related to the first altitude is configured independently of the information related to the second RLF timer related to the second altitude, and

wherein the first RLF configuration information related to the first altitude is configured independently of the second RLF configuration information related to the second altitude.

3. The method of claim 2,

wherein, based on that the first altitude is lower than the second altitude, the first maximum number of OOS related to the first altitude is configured to be greater than the second maximum number of OOS related to the second altitude, and the first RLF timer related to the first altitude is configured to be greater than the second RLF timer related to the second altitude.

4. The method of claim 2,

wherein, based on that the first altitude is lower than the second altitude, the first maximum number of OOS related to the first altitude is configured to be smaller than the second maximum number of OOS related to the second altitude, and the first RLF timer related to the first altitude is configured to be smaller than the second RLF timer related to the second altitude.

5. The method of claim 1,

wherein the first maximum number of OOS related to the first altitude is related to information related to consecutive OOS.

6. The method of claim 1,

wherein the first RLF configuration information related to the first altitude includes information related to a first maximum number of in-sync (IS) related to the first altitude,

wherein the second RLF configuration information related to the second altitude includes information related to a second maximum number of IS related to the second altitude, and

wherein the first RLF timer related to the first altitude is stopped based on that the first RLF timer related to the first altitude is running and a number of IS has reached the first maximum number of IS related to the first altitude.

7. The method of claim 6,

wherein the information related to the first maximum number of OOS related to the first altitude is configured independently of the information related to the second maximum number of OOS related to the second altitude,

wherein the information related to the first RLF timer related to the first altitude is configured independently of the information related to the second RLF timer related to the second altitude,

wherein the information related to the first maximum number of IS related to the first altitude is configured independently of the information related to the second maximum number of IS related to the second altitude, and

wherein the first RLF configuration information related to the first altitude is configured independently of the second RLF configuration information related to the second altitude.

8. The method of claim 7,

wherein, based on that the first altitude is lower than the second altitude, the first maximum number of IS related to the first altitude is configured to be smaller than the second maximum number of IS related to the second altitude.

9. The method of claim 7,
wherein, based on that the first altitude is lower than the second altitude, the first maximum number of IS related to the first altitude is configured to be greater than the second maximum number of IS related to the second altitude.

10. The method of claim 1,

wherein the number of OOS is a number of OOS related to the first altitude based on that the altitude of the first device has been identified as the first altitude,
wherein the first RLF timer related to the first altitude is initiated based on that the number of OOS related to the first altitude has reached the first maximum number of OOS related to the first altitude, and
wherein the number of OOS related to the first altitude is incremented based on that information related to OOS has been obtained from a lower layer of the first device at the first altitude.

11. The method of claim 10,
wherein an RLF is detected for the first altitude based on that the first RLF timer related to the first altitude has expired.

12. The method of claim 10,
wherein an RLF is detected based on that the first RLF timer related to the first altitude and the second RLF timer related to the second altitude have expired.

13. The method of claim 12,
wherein the RLF is detected based on that both the first RLF timer related to the first altitude and the second RLF timer related to the second altitude have expired.

14. A first device adapted to perform wireless communication, the first device comprising:

at least one transceiver;
at least one processor; and
at least one memory connected to the at least one processor and storing instructions that, based on being executed by the at least one processor, cause the first device to perform operations comprising:

obtaining first radio link failure (RLF) configuration information related to a first altitude including information related to a first maximum number of out-of-sync (OOS) related to the first altitude and information related to a first RLF timer related to the first altitude, and second RLF configuration information related to a second altitude including information related to a second maximum number of OOS related to the second altitude and information related to a second RLF timer related to the second altitude;
identifying an altitude of the first device as the first altitude;
based on that the altitude of the first device has been identified as the first altitude, selecting the first maximum number of OOS related to the first altitude and the first RLF timer related to the first altitude; and
based on that a number of OOS has reached the first maximum number of OOS related to the first altitude, initiating the first RLF timer related to the first altitude;
wherein the number of OOS is incremented based on that information related to OOS has been obtained from a lower layer of the first device.

15. A processing device adapted to control a first device, the processing device comprising:

at least one processor; and
at least one memory connected to the at least one processor and storing instructions that, based on being executed by the at least one processor, cause the first device to perform operations comprising:

obtaining first radio link failure (RLF) configuration information related to a first altitude including information related to a first maximum number of out-of-sync (OOS) related to the first altitude and information related to a first RLF timer related to the first altitude, and second RLF configuration information related to a second altitude including information related to a second maximum number of OOS related to the second altitude and information related to a second RLF timer related to the second altitude;
identifying an altitude of the first device as the first altitude;
based on that the altitude of the first device has been identified as the first altitude, selecting the first maximum number of OOS related to the first altitude and the first RLF timer related to the first altitude; and

based on that a number of OOS has reached the first maximum number of OOS related to the first altitude, initiating the first RLF timer related to the first altitude;

wherein the number of OOS is incremented based on that information related to OOS has been obtained from a lower layer of the first device.

16. A non-transitory computer-readable storage medium storing instructions that, based on being executed, cause a first device to perform operations comprising:

obtaining first radio link failure (RLF) configuration information related to a first altitude including information related to a first maximum number of out-of-sync (OOS) related to the first altitude and information related to a first RLF timer related to the first altitude, and second RLF configuration information related to a second altitude including information related to a second maximum number of OOS related to the second altitude and information related to a second RLF timer related to the second altitude;

identifying an altitude of the first device as the first altitude;

based on that the altitude of the first device has been identified as the first altitude, selecting the first maximum number of OOS related to the first altitude and the first RLF timer related to the first altitude; and

based on that a number of OOS has reached the first maximum number of OOS related to the first altitude, initiating the first RLF timer related to the first altitude;

wherein the number of OOS is incremented based on that information related to OOS has been obtained from a lower layer of the first device.

17. A method performed by a base station in a wireless communication system, the method comprising:

obtaining first radio link failure (RLF) configuration information related to a first altitude including information related to a first maximum number of out-of-sync (OOS) related to the first altitude and information related to a first RLF timer related to the first altitude, and second RLF configuration information related to a second altitude including information related to a second maximum number of OOS related to the second altitude and information related to a second RLF timer related to the second altitude;

transmitting, to a first device, the first RLF configuration information related to the first altitude including information related to the first maximum number of OOS related to the first altitude and information related to the first RLF timer related to the first altitude, and the second RLF configuration information related to the second altitude including information related to the second maximum number of OOS related to the second altitude and information related to the second RLF timer related to the second altitude; and

based on that an RLF has been detected, receiving, from the first device, information related to detection of the RLF,

wherein an altitude of the first device is identified as the first altitude,

wherein the first maximum number of OOS related to the first altitude and the first RLF timer related to the first altitude are selected based on that the altitude of the first device has been identified as the first altitude,

wherein the first RLF timer related to the first altitude is initiated based on that a number of OOS has reached the first maximum number of OOS related to the first altitude, and

wherein the number of OOS is incremented based on that information related to OOS has been obtained from a lower layer of the first device.

18. A base station adapted to perform wireless communication, the base station comprising:

at least one transceiver;

at least one processor; and

at least one memory connected to the at least one processor and storing instructions that, based on being executed by the at least one processor, cause the base station to perform operations comprising:

obtaining first radio link failure (RLF) configuration information related to a first altitude including information related to a first maximum number of out-of-sync (OOS) related to the first altitude and information related to a first RLF timer related to the first altitude, and second RLF configuration information related to a second altitude including information related to a second maximum number of OOS related to the second altitude and information related to a second RLF timer related to the second altitude;

transmitting, to a first device, the first RLF configuration information related to the first altitude including information related to the first maximum number of OOS related to the first altitude and information related to the first RLF timer related to the first altitude, and the second RLF configuration information related to the second altitude including information related to the second maximum number of OOS related to the second altitude and information related to the second RLF timer related to the second altitude; and

based on that an RLF has been detected, receiving, from the first device, information related to detection of the RLF,

wherein an altitude of the first device is identified as the first altitude,

wherein the first maximum number of OOS related to the first altitude and the first RLF timer related to the first altitude are selected based on that the altitude of the first device has been identified as the first altitude,

wherein the first RLF timer related to the first altitude is initiated based on that a number of OOS has reached the first maximum number of OOS related to the first altitude, and

wherein the number of OOS is incremented based on that information related to OOS has been obtained from a lower layer of the first device.

**19.** A processing device adapted to control a base station, the processing device comprising:

at least one processor; and
at least one memory connected to the at least one processor and storing instructions that, based on being executed by the at least one processor, cause the base station to perform operations comprising:

obtaining first radio link failure (RLF) configuration information related to a first altitude including information related to a first maximum number of out-of-sync (OOS) related to the first altitude and information related to a first RLF timer related to the first altitude, and second RLF configuration information related to a second altitude including information related to a second maximum number of OOS related to the second altitude and information related to a second RLF timer related to the second altitude;

transmitting, to a first device, the first RLF configuration information related to the first altitude including information related to the first maximum number of OOS related to the first altitude and information related to the first RLF timer related to the first altitude, and the second RLF configuration information related to the second altitude including information related to the second maximum number of OOS related to the second altitude and information related to the second RLF timer related to the second altitude; and

based on that an RLF has been detected, receiving, from the first device, information related to detection of the RLF,

wherein an altitude of the first device is identified as the first altitude,

wherein the first maximum number of OOS related to the first altitude and the first RLF timer related to the first altitude are selected based on that the altitude of the first device has been identified as the first altitude,

wherein the first RLF timer related to the first altitude is initiated based on that a number of OOS has reached the first maximum number of OOS related to the first altitude, and

wherein the number of OOS is incremented based on that information related to OOS has been obtained from a lower layer of the first device.

**20.** A non-transitory computer-readable storage medium storing instructions that, based on being executed, cause a base station to perform operations comprising:

obtaining first radio link failure (RLF) configuration information related to a first altitude including information related to a first maximum number of out-of-sync (OOS) related to the first altitude and information related to a first RLF timer related to the first altitude, and second RLF configuration information related to a second altitude including information related to a second maximum number of OOS related to the second altitude and information related to a second RLF timer related to the second altitude;

transmitting, to a first device, the first RLF configuration information related to the first altitude including information related to the first maximum number of OOS related to the first altitude and information related to the first RLF timer related to the first altitude, and the second RLF configuration information related to the second altitude including information related to the second maximum number of OOS related to the second altitude and information related to the second RLF timer related to the second altitude; and

based on that an RLF has been detected, receiving, from the first device, information related to detection of the RLF,

wherein an altitude of the first device is identified as the first altitude,

wherein the first maximum number of OOS related to the first altitude and the first RLF timer related to the first altitude are selected based on that the altitude of the first device has been identified as the first altitude,

wherein the first RLF timer related to the first altitude is initiated based on that a number of OOS has reached the first maximum number of OOS related to the first altitude, and

wherein the number of OOS is incremented based on that information related to OOS has been obtained from a lower layer of the first device.

FIG. 1

# FIG. 2

EP 4 734 598 A1

# FIG. 3

Satellite
(or UAS platform)

Service
link

Feeder link

Data network

Gateway

User
Equipments

Beam foot
print

Field of view of the satellite
(or UAS platform)

# FIG. 4

Satellite
(or UAS platform)

Satellite
(or UAS platform)

ISL

Feeder link

Service
link

Feeder link
(mandatory if on ISL)

Data network

Gateway

Beam foot
print

User
Equipments

Field of view of the satellite
(or UAS platform)

EP 4 734 598 A1

# FIG. 5

(a)

3GPP system

Sensing signals

Object

Sensing Receiver

3GPP sensing data

Processing

Sensing results

wireless sensing service

Sensing results

Sensing Transmitter

Object

Trusted 3rd party

(b)

3GPP system

Sensing Transmitter

Sensing signals

Sensing Receiver

3GPP sensing data

Processing

Sensing results

wireless sensing service

Sensing results

Object

Object

Trusted 3rd party

EP 4 734 598 A1

# FIG. 6

Resource grid

A carrier
(up to 3300 subcarriers,
i.e., 275 RBs)

A BWP

1RB=12 subcarriers

1 RE

1subcarrier

1 symbol

l=0 • • •

k=0

EP 4 734 598 A1

# FIG. 7

PRB N3

PRB 1

PRB 0

$N_{BWP, 2}^{size}$

PRB N2

PRB 1

PRB 0

$N_{BWP, 1}^{size}$

Carrier
Bandwidth

$N_{BWP, 2}^{start}$

PRB N1

PRB 1

PRB 0

$N_{BWP, 0}^{size}$

$N_{BWP, 1}^{start}$

CRB 0

$N_{BWP, 0}^{start}$

Freq.

Time

PRB 0 (Point A) in reference resource block

# FIG. 8

| BS | first UE | second UE | first UE | second UE |

resource scheduling — S800

PSCCH — S810  PSCCH — S810

PSSCH — S820  PSSCH — S820

PSFCH — S830  PSFCH — S830

PUCCH/PUSCH — S840

(a)                                      (b)

# FIG. 9

Consecutive
DTX(s)

RLF
detection

DTX=0          DTX=1          DTX=2          DTX=3

PSFCH is absent    PSFCH is absent    PSFCH is absent
on the PSFCH       on the PSFCH       on the PSFCH
reception          reception          reception

Consecutive
DTX(s)

DTX=0          DTX=1          DTX=0          DTX=1

PSFCH is absent    PSFCH is present    PSFCH is absent
on the PSFCH       on the PSFCH        on the PSFCH
reception          reception           reception

# FIG. 10

First Carrier

Consecutive DTX(s)

RLF detection

DTX=0 DTX=1 DTX=2 DTX=3

PSFCH is absent on the PSFCH reception

PSFCH is absent on the PSFCH reception

PSFCH is absent on the PSFCH reception

Second Carrier

Consecutive DTX(s)

RLF detection

DTX=0 DTX=1 DTX=0 DTX=1 DTX=2 DTX=3

PSFCH is absent on the PSFCH reception

PSFCH is present on the PSFCH reception

PSFCH is absent on the PSFCH reception

PSFCH is absent on the PSFCH reception

PSFCH is absent on the PSFCH reception

EP 4 734 598 A1

# FIG. 11

EP 4 734 598 A1

200ms

100ms

If n311, then stop timer

t

n311

If timer expires,
Radio Link Failed

n310

t310

⬜ : Out-of-Sync

▨ : In Sync

# FIG. 12

Height (m)

| | |
|---|---|
| 3000 | |
| | RLF parameter configuration "4" |
| 1500 | |
| | RLF parameter configuration "3" |
| 600 | |
| | RLF parameter configuration "2" |
| 300 | |
| | RLF parameter configuration "1" |
| 0 | |

RLF parameter configuration

# FIG. 13

Height (m)

3000 ┤

Sidelink RLF parameter configuration "4"

1500 ┤

Sidelink RLF parameter configuration "3"

600 ┤

Sidelink RLF parameter configuration "2"

300 ┤

Sidelink RLF parameter configuration "1"

0 ┴

Sidelink RLF parameter configuration

# FIG. 14

obtaining first RLF configuration information related to
a first altitude including information related to
a first maximum number of OOS related to
a first altitude and information related to
a first RLF timer related to a first altitude,
and second RLF configuration information related to
a second altitude including information related to
a second maximum number of OOS related to
a second altitude and information related to
a second RLF timer related to a second altitude ⟶ S1410

identifying an altitude of a first device as a first altitude ⟶ S1420

based on that an altitude of
a first device has been identified as a first altitude,
selecting a first maximum number of
OOS related to a first altitude
and a first RLF timer related to a first altitude ⟶ S1430

based on that a number of OOS has reached
a first maximum number of OOS related to a first altitude,
initiating a first RLF timer related to a first altitude ⟶ S1440

# FIG. 15

obtaining first RLF configuration information related to
a first altitude including information related to
a first maximum number of OOS related to
a first altitude and information related to
a first RLF timer related to a first altitude,
and second RLF configuration information related to
a second altitude including information related to
a second maximum number of OOS related to
a second altitude and information related to
a second RLF timer related to a second altitude

~S1510

transmitting, to a first device, a first RLF configuration
information related to a first altitude including
information related to a first maximum number of
OOS related to a first altitude
and information related to a first RLF timer related to
a first altitude, and second RLF configuration information
related to a second altitude including information
related to a second maximum number of
OOS related to a second altitude
and information related to a second RLF timer
related to a second altitude

~S1520

based on that a RLF has been detected,
receiving, from a first device,
information related to detection of a RLF

~S1530

# FIG. 16

# FIG. 17

# FIG. 18

1000(102/106, 202/206)

codewords

| | 1010 | | 1020 | | 1030 | layers | 1040 | | 1050 | | 1060 | antenna ports |

```
codewords                                    layers                              antenna ports
              1010        1020        1030            1040        1050       1060
           ┌──────────┐ ┌──────────┐ ┌────────┐    ┌────────┐ ┌──────────┐ ┌──────────┐
      ──→  │Scrambler │→│Modulator │→│        │  ──→│        │→│ Resource │→│  Signal  │──→
           └──────────┘ └──────────┘ │ Layer  │    │        │ │  Mapper  │ │Generator │
                                     │ Mapper │    │Precoder│ └──────────┘ └──────────┘
           ┌──────────┐ ┌──────────┐ │        │  ──→│        │ ┌──────────┐ ┌──────────┐
      ──→  │Scrambler │→│Modulator │→│        │  ──→│        │→│ Resource │→│  Signal  │──→
           └──────────┘ └──────────┘ └────────┘    └────────┘ │  Mapper  │ │Generator │
              1010        1020                                └──────────┘ └──────────┘
                                                                 1050         1060
```

# FIG. 19

Device (100,200)

| Communication unit (110)<br>(e.g., 5G communication unit) | Control unit (120)<br>(e.g., processor(s)) |
|---|---|
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 20

100

140a

Power supply unit

108

110

Communication unit

120

Control unit

130

Memory unit

140c

I/O unit

Display

140d

Interface unit

140b

# FIG. 21

Car or autonomous vehicle
(100)

| Communication unit (110) |
| Control unit (120) |
| Memory unit (130) |
| Driving unit (140a) |
| Power supply unit (140b) |
| Sensor unit (140c) |
| Autonomous driving unit (140d) |

108

208

Device
(100, 200)

| Communication unit (210) |
| Control unit (220) |
| Memory unit (230) |
| Driving unit (140a) |
| Power supply unit (140b) |
| Sensor unit (140c) |
| Autonomous driving unit (140d) |

EP 4 734 598 A1

## INTERNATIONAL SEARCH REPORT

| International application No. |
| --- |
| **PCT/KR2024/008684** |

**A. CLASSIFICATION OF SUBJECT MATTER**

**H04W 24/08**(2009.01)i; **H04W 24/10**(2009.01)i; **H04W 76/18**(2018.01)i; **H04W 76/28**(2018.01)i; **G01C 21/00**(2006.01)i; **H04W 84/06**(2009.01)i; **H04W 52/02**(2009.01)i; **H04W 92/10**(2009.01)i

According to International Patent Classification (IPC) or to both national classification and IPC

**B. FIELDS SEARCHED**

Minimum documentation searched (classification system followed by classification symbols)

H04W 24/08(2009.01); H04B 7/0408(2017.01); H04B 7/06(2006.01); H04B 7/08(2006.01); H04W 48/14(2009.01); H04W 48/18(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고도(altitude), 동기 불일치(OOS), RLF, 타이머(timer)

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-2023-0021152 A (TELEFONAKTIEBOLAGET LM ERICSSON(PUBL)) 13 February 2023 (2023-02-13)<br>See paragraphs [0148], [0201]-[0209] and [0242]. | 1,5-6,10-11,14-20 |
| A | | 2-4,7-9,12-13 |
| Y | KR 10-2013-0040207 A (QUALCOMM INCORPORATED) 23 April 2013 (2013-04-23)<br>See paragraphs [0004] and [0035]-[0038] and figures 4-5. | 1,5-6,10-11,14-20 |
| A | OPPO. Discussion on Measurements in Radio Link Failure Report. R2-1909789, 3GPP TSG-RAN2 Meeting #107. Prague, Czech Republic. 15 August 2019.<br>See pages 1-3. | 1-20 |
| A | WO 2022-186575 A1 (SAMSUNG ELECTRONICS CO., LTD.) 09 September 2022 (2022-09-09)<br>See paragraphs [0065]-[0224] and figure 1. | 1-20 |

☑ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **23 September 2024** | **23 September 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/008684** |

**C.      DOCUMENTS CONSIDERED TO BE RELEVANT**

| Category* | Citation of document, with indication, where appropriate, of the relevant passages | Relevant to claim No. |
| --- | --- | --- |
| A | US 2019-0028174 A1 (QUALCOMM INCORPORATED) 24 January 2019 (2019-01-24)<br>See paragraphs [0104]-[0117] and figure 9. | 1-20 |

Form PCT/ISA/210 (second sheet) (July 2022)

# EP 4 734 598 A1

## INTERNATIONAL SEARCH REPORT
### Information on patent family members

International application No.

**PCT/KR2024/008684**

| Patent document cited in search report | | | Publication date (day/month/year) | Patent family member(s) | | | Publication date (day/month/year) |
|---|---|---|---|---|---|---|---|
| KR | 10-2023-0021152 | A | 13 February 2023 | BR | 112019022945 | A2 | 09 June 2020 |
| | | | | CA | 3062523 | A1 | 08 November 2018 |
| | | | | CA | 3062523 | C | 30 January 2024 |
| | | | | CN | 110574307 | A | 13 December 2019 |
| | | | | CN | 110574307 | B | 27 February 2024 |
| | | | | EP | 3619823 | A1 | 11 March 2020 |
| | | | | EP | 3619823 | B1 | 22 June 2022 |
| | | | | EP | 4138313 | A1 | 22 February 2023 |
| | | | | JP | 2020-520579 | A | 09 July 2020 |
| | | | | JP | 6889280 | B2 | 18 June 2021 |
| | | | | KR | 10-2019-0138873 | A | 16 December 2019 |
| | | | | KR | 10-2022-0013019 | A | 04 February 2022 |
| | | | | KR | 10-2611077 | B1 | 06 December 2023 |
| | | | | US | 11005701 | B2 | 11 May 2021 |
| | | | | US | 11616684 | B2 | 28 March 2023 |
| | | | | US | 11916724 | B2 | 27 February 2024 |
| | | | | US | 2020-0059397 | A1 | 20 February 2020 |
| | | | | US | 2021-0328857 | A1 | 21 October 2021 |
| | | | | US | 2023-0275801 | A1 | 31 August 2023 |
| | | | | WO | 2018-203785 | A1 | 08 November 2018 |
| KR | 10-2013-0040207 | A | 23 April 2013 | CN | 102907163 | A | 30 January 2013 |
| | | | | EP | 2572551 | A1 | 27 March 2013 |
| | | | | JP | 2013-526821 | A | 24 June 2013 |
| | | | | TW | 201143489 | A | 01 December 2011 |
| | | | | US | 2011-0286321 | A1 | 24 November 2011 |
| | | | | US | 8406160 | B2 | 26 March 2013 |
| | | | | WO | 2011-146083 | A1 | 24 November 2011 |
| WO | 2022-186575 | A1 | 09 September 2022 | CN | 116918280 | A | 20 October 2023 |
| | | | | EP | 4285516 | A1 | 06 December 2023 |
| | | | | KR | 10-2023-0152024 | A | 02 November 2023 |
| | | | | US | 2024-0056850 | A1 | 15 February 2024 |
| US | 2019-0028174 | A1 | 24 January 2019 | BR | 112020001259 | A2 | 21 July 2020 |
| | | | | CA | 3066898 | A1 | 31 January 2019 |
| | | | | CN | 111034337 | A | 17 April 2020 |
| | | | | CN | 111034337 | B | 24 October 2023 |
| | | | | EP | 3659389 | A1 | 03 June 2020 |
| | | | | EP | 3659389 | B1 | 17 April 2024 |
| | | | | JP | 2020-528697 | A | 24 September 2020 |
| | | | | JP | 7254063 | B2 | 07 April 2023 |
| | | | | KR | 10-2020-0030546 | A | 20 March 2020 |
| | | | | KR | 10-2658512 | B1 | 17 April 2024 |
| | | | | US | 10680700 | B2 | 09 June 2020 |
| | | | | WO | 2019-023075 | A1 | 31 January 2019 |

Form PCT/ISA/210 (patent family annex) (July 2022)